# EUROPÄISCHE PATENTSCHRIFT

(11) **EP 1 909 004 B1**
(45) Veröffentlichungstag und Bekanntmachung des Hinweises auf die Patenterteilung: **10.02.2010**
(21) Anmeldenummer: 06405430.7
(22) Anmeldetag: 06.10.2006
(51) Int. Cl.: F16K 1/04

(54) **Entleerventil**
Drain valve
Soupape de vidange

(43) Veröffentlichungstag der Anmeldung: 09.04.2008
(73) Patentinhaber: Georg Fischer JRG AG, 4450 Sissach (CH)
(72) Erfinder: Bürli, Christian, 4460 Geiterkinden (CH)
(74) Vertreter: Weiss, Wolfgang

(56) Entgegenhaltungen:
- EP-A- 0 696 699
- EP-A- 1 273 836
- DE-C- 643 903
- DE-U1- 20 102 437
- FR-A- 1 189 277

## Beschreibung

### Anwendungsgebiet der Erfindung

Die Erfindung betrifft ein Entleerventil für ein flüssiges Medium mit einer Innenhülse mit einem Axialdurchgang, der als Strömungskanal mit einer radialen Ausflussöffnung verbunden ist, und einem Aussengewinde, das zum Eingriff mit einem Innengewinde an einem Leitungsstutzen bestimmt ist. Das Entleerventil hat ferner einen in der Innenhülse axial angeordneten Stössel, der sich zwischen einem im Zustand des geschlossenen Entleerventils eingenommenen Nullhub und einem im vollständig offenem Zustand eingenommenen Maximalhub bewegen lässt. Ein drehbares Betätigungselement, welches mit dem Stössel in Verbindung steht, dient zu seinem axialen Hub. Eine Aussenhülse mit einem Ausflussstutzen und einem die Innenhülse umgebenden Mantel ist um die Innenhülse radial schwenkbar, wobei die Ausflussöffnung der Innenhülse mit einem Kanal im Ausflussstutzen strömungsseitig verbunden ist. Am Stössel ist eine Hauptdichtung angeordnet, welche dazu bestimmt ist, im Zustand des geschlossenen Entleerventils - beim eingenommenen Nullhub - gegen eine an der Innenhülse liegende Dichtfläche wirkend den Zufluss zur radialen Ausflussöffnung zu sperren. Typisch wird das Entleerventil zusammen mit einem Absperrventil in das Leitungsnetz eingebaut.

### Stand der Technik

Die EP 0 696 699 A1 hat ein Entleerventil zum Entleeren von Kunststoffleitungen, insbesondere Wasserleitungen zum Gegenstand. Das Entleerventil weist ein Gehäuse mit unterschiedlichen, hohlzylindrischen Bereichen auf, zwischen denen aufgrund der unterschiedlichen Innendurchmesser eine Dichtfläche ausgebildet wird. An einem Ende ist das Gehäuse mit einem Leitungsbauteil verbindbar. Am gegenüberliegenden Ende sitzt innerhalb des Gehäuses eine Gewindehülse, wobei das Innengewinde koaxial zur Längsachse des Entleerventils liegt. Innerhalb der Gewindehülse verläuft eine Spindel mit einem kolbenartigen Ventilkörper, die mit ihrem Aussengewinde mit dem Innengewinde der Gewindehülse in Eingriff steht. Der Ventilkörper liegt mit seinem Ventilteller in Schliessstellung an der Dichtungsfläche des Gehäuses an und verhindert so den Durchfluss des Mediums. Zwischen der Dichtungsfläche des Gehäuses und der Gewindehülse ist in radialer Richtung, bezogen auf die Spindel, eine Entleeröffnung im Gehäuse vorgesehen, über die ein innerhalb des Gehäuses vorhandenes Medium abfliessen kann. Vor der Dichtfläche mit dem Ventilteller verbleibt jedoch ein Freiraum, in dem Medium nach dem Entleervorgang weiter ansteht und in dem sich Verunreinigungen ansammeln können.

Ein anderes Entleerventil ist aus der DE 20 2005 005 553 U1 bekannt. Dieses Entleerventil besteht aus einem Gehäuse sowie einem Verschlusskörper und ist zum Einsetzen in ein Absperrventil vorgesehen. Der Verschlusskörper ist innerhalb des Gehäuses über ein Gewinde axial beweglich und dient der Schliess- bzw. Offenstellung des Ventils. Der Verschlusskörper besitzt am inneren Ende eine konische Aussenringfläche mit einer daran angrenzenden Umfangsnut, in der ein O-Ring eingelegt ist, der in Verschlussstellung des Entleerventils an einer konischen, komplementären Innenringfläche des Gehäuses anliegt und den Durchfluss eines Mediums verhindert. Hinter dem O-Ring sind Querbohrungen am Verschlusskörper vorgesehen, die in einen Hohlraum innerhalb des Verschlusskörpers führen und bei geöffneter Stellung des Ventils den Durchfluss eines entsprechenden Mediums und damit die Entleerung eines Systems ermöglichen. Bei geschlossener Stellung des Entleerventils steht das Medium innerhalb des vorderen Gehäuseabschnitts an, der quasi einen Totraum darstellt und von dem Verunreinigungen ausgehen können.

In der Firmenschrift der R. Nussbaum AG, CH-4601 Olten / Schweiz, "Das Armaturen-System der Hauswasserzentrale", technische Unterlagen "Armaturen" sowie im Lieferprogramm der Firma ist ein Entleerventil mit der Artikel-Nr. 2270.02 offenbart. Der Ventilkörper hat am unteren Ende einen Zapfen mit einem Aussengewinde, wodurch der Ventilkörper beispielsweise in eine Rücklaufleitung einsetzbar ist. Mittels eines Handrads, das am oberen Ende des Ventilkörpers sitzt und mit dem Stössel verbunden ist, lässt sich der Stössel, der sich innerhalb des Ventilkörpers erstreckt und in Gewindeeingriff mit diesem steht, in axialer Richtung verstellen. Der Ventilkörper ist radial von einem Hülsenstück umgeben, das in beliebiger Drehstellung schwenkbar ist und einen daran angesetzten Aussenstutzen besitzt. Der Ventilkörper hat am unteren einzusetzenden Ende einen axial mündenden Strömungsdurchgang, der in Richtung des Handrads mit einem Radialdurchgang durch den Ventilkörper verbunden ist, von hier aus in das Hülsenstück einmündet und weiter in den Aussenstutzen übergeht. Im geschlossenen Zustand verschliesst ein Dichtelement am Stössel im Bereich des unteren Endes innerhalb des Ventilkörpers den Strömungseintritt eines Mediums entgegen der Ausflussrichtung vor dem Radialdurchgang. In der Offenstellung fährt der Stössel in Richtung oberes Ende des Ventilkörpers über den Radialausgang hinweg und gibt die Austrittsöffnung für die Entleerung frei. Nachteilig bei dieser Konstruktion ist, dass bei geschlossenem Entleerventil zwischen Dichtelement und Sitz des Entleerventils, z.B. in einer Rücklaufleitung, ein Totraum verbleibt, in dem sich Verunreinigungen ansammeln können. Ausserdem geht der am Hülsenstück ansetzende Aussenstutzen in einem unveränderlichen Winkel ab, was bei engen Einbausituationen beim Anbringen einer Entleerleitung Schwierigkeiten bereiten kann.

Die DE 643 903 hat ein gattungsgemässes Entleerventil zum Ggegenstand, wie es im Oberbegriff des Patentanspruchs 1 der vorliegenden Anmeldung definiert ist.

### Aufgabe der Erfindung

Im Bestreben nach weiterer Vervollkommnung der bisher bekannten Entleerventile, liegt der Erfindung die Aufgabe zugrunde, eine zuverlässige, langlebige Entleerungseinrichtung zu ermöglichen sowie eine dauerhafte Leichtgängigkeit der Betätigungselemente zu schaffen. Bei geschlossener Stellung dürfen keine "toten" Hohlräume verbleiben, in denen sich hygienisch bedenkliche Stoffe einlagern können. Eine weitere Aufgabe der Erfindung besteht darin, dass auch bei beengten Einbausituationen ein leichtes Anbringen einer Entleerleitung am Ausflussstutzen möglich ist. Ausserdem sollte die geschlossene Stellung durch eine Anzeige optisch signalisiert werden. Darüber hinaus muss sich das Ventil in verschiedenen Dimensionen zu effizienten Kosten in Serie fertigen lassen.

### Übersicht über die Erfindung

Das Entleerventil für ein flüssiges Medium hat eine Innenhülse mit einem Axialdurchgang, der als Strömungskanal mit einer radialen Ausflussöffnung verbunden ist, und ein Aussengewinde, das zum Eingriff mit einem Innengewinde an einem Leitungsstutzen bestimmt ist. In der Innenhülse ist ein Stössel axial angeordnet, der sich zwischen einem im Zustand des geschlossenen Entleerventils eingenommenen Nullhub und einem im vollständig offenen Zustand eingenommenen Maximalhub bewegen lässt. Ein drehbares Betätigungselement, welches mit dem Stössel in Verbindung steht dient zu seinem axialen Hub. Das Ventil hat eine Aussenhülse mit einem Ausflussstutzen und einem die Innenhülse umgebenden Mantel, wobei die Aussenhülse um die Innenhülse radial schwenkbar ist und die Ausflussöffnung der Innenhülse mit einem Kanal im Ausflussstutzen strömungsseitig verbunden ist. Die am Stössel angeordnete Hauptdichtung ist dazu bestimmt, im Zustand des geschlossenen Entleerventils, beim eingenommenen Nullhub, gegen eine an der Innenhülse liegende Dichtfläche wirkend, den Zufluss zur radialen Ausflussöffnung zu sperren. Die Dichtfläche für die Hauptdichtung ist an der Eintrittsmündung im Axialdurchgang ausgebildet. Die Hauptdichtung ist beim Maximalhub von der Innenhülse entfernt von der Dichtfläche abgehoben. Die Hauptdichtung ist kappenförmig ausgebildet, um die Stirnfläche des Stössels zu übergreifen.

Nachfolgend werden spezielle Ausführungsformen der Erfindung definiert: Die Hauptdichtung sitzt vorzugsweise lösbar auf dem Stössel. Die Stirnfläche des Stössels geht in einen ersten Kragen über, dem eine erste Nut folgt, die sich vor einem zweiten Kragen befindet. An der Stirnfläche des Stössels liegt die Bodenfläche der Hauptdichtung an. Die Seitenwand der Hauptdichtung umgreift den ersten Kragen am Stössel und ragt in die erste Nut hinein. Der im lichten Durchmesser verengte Innenrand der Hauptdichtung kommt in der ersten Nut zu liegen. Ein Abschnitt der Seitenwand der Hauptdichtung ist im geschlossenen Zustand beim Nullhub zum Anliegen an der Dichtfläche der Innenhülse bestimmt. Der zweite Kragen stösst im geschlossenen Zustand beim Nullhub an eine Anschlagschulter im Axialdurchgang der Innenhülse, was ausser der Hubbegrenzung zugleich eine zusätzliche Dichtstelle ergibt. Dem zweiten Kragen folgt ein im Durchmesser reduzierter dritter Abschnitt mit vorzugsweise kegelförmigem Übergang.

Am Ausflussstutzen ist eine abgewinkelte Tülle, die als Formstück einen Tüllenwinkel aufweist, frei drehbar angeordnet. Die Tülle ist vorzugsweise auf den Ausflussstutzen aufrastbar. Vom Mantel der Aussenhülse erstreckt sich ein zum Ausflussstutzen gehörender Ansatz, der in einen Fortsatz übergeht. Der Ausflussstutzen nimmt mit dem vom Mantel abgehenden Ansatz und dem daran anschliessenden Fortsatz einen Stutzenwinkel ein, der sich zur auf die Längserstreckung des Entleerventils gerichteten Senkrechten bemisst. Der Fortsatz ist mit einem Ansatz der Tülle verbunden. Vom Ansatz geht im Tüllenwinkel ein Schlauchanschluss abgewinkelt ab. Der Kanal im Ausflussstutzen setzt sich als ein am freien Ende der Tülle offener Kanal fort. Der Stutzenwinkel und der Tüllenwinkel haben die gleichen Werte, z.B. 22.5°. Somit ist der Schlauchanschluss in einem Anschlusswinkel zwischen 0° und der Summe aus dem Tüllenwinkel und dem Stutzenwinkel durch Drehung der Tülle einstellbar, bemessen zur auf die Längserstreckung des Entleerventils gerichteten Senkrechten.

Am Fortsatz des Ausflussstutzens ist eine Haltekontur vorhanden, und der Ansatz der Tülle hat eine dazu komplementäre Gegenkontur, die im montierten Zustand ineinander greifen. Der Schlauchanschluss besitzt eine Aussenprofilierung. Am Ausflussstutzen befindet sich ein Anschlag, gegen den der aufgesteckte Ansatz der Tülle stösst. Der Mantel der Aussenhülse umgibt eine Durchgangsöffnung. In der Durchgangsöffnung ist ein nach innen erhabener Bund vorgesehen, der zwischen zwei zueinander beabstandeten äusseren Bunden der Innenhülse zu liegen kommt. An der Aussenhülse zweigt der Kanal des Ausflussstutzens im Bereich des inneren Bunds ab.

Das Betätigungselement besitzt einerseits ein von aussen zugängliches Griffstück und andererseits einen zylindrischen Schaft, wobei beide durch ein Mittelstück verbunden sind. Der Schaft ist zwischen einem am Stössel im Durchmesser verdickten zweiten Ringsegment sowie einem Haltering axial fixiert, der in einer am Stössel vorhandenen Nut sitzt. Der Schaft ist mit einem Aussengewinde versehen, welches mit einem Innengewinde an der Innenhülse in Eingriff steht.

Die Ausflussöffnung an der Innenhülse ist an einem im Aussendurchmesser verminderten Mittelabschnitt vorhanden, der beidseits von jeweils einem äusseren Bund begrenzt wird. Die Ausflussöffnung ist beidseits der Hülsenwandung durch eine jeweilige Abflachung erzeugt, welche sich anteilig über den Mittelabschnitt bis an den Bereich des Innengewindes erstrecken. Zwischen dem Aussengewinde mit einer benachbarten Nut zur Aufnahme einer ersten Dichtung und dem nächstliegenden äusseren Bund ist eine Aussenprofilierung, z.B. ein Sechskant, vorgesehen. Am zum Aussengewinde gegenüber liegenden Ende, das mit einer Ringschulter abschliesst, hat die Innenhülse eine durch Verminderung des Aussendurchmessers erzeugte Freifläche, die an die Ringschulter angrenzt. Der am Mantel der Aussenhülse nach innen erhabene Bund ist zwischen den beiden äusseren Bunden der Innenhülse formschlüssig eingerastet. Der Eintrittsquerschnitt in den Kanal im Ansatz des Ausflussstutzens erstreckt sich zumindest anteilig über die Ausflussöffnung hinaus innerhalb des Mittelabschnitts.

An einem zweiten Abschnitt des Stössels ist zumindest eine Radialwulst mit Abdichtfunktion gegenüber dem Schaft des Betätigungselements vorhanden. Der Schaft des Betätigungselements geht an einer Innenschulter in das Mittelstück über. Der Haltering liegt auf der Innenschulter an. Das Mittelstück besitzt eine äussere Markierzone, welche zum Griffstück benachbart ist und der Visualisierung für die Hubstellung des Entleerventils dient. Das Mittelstück besitzt am Übergang zum Schaft eine Nut zur Aufnahme einer zweiten Dichtung mit der Abdichtfunktion gegenüber der Durchgangsöffnung im Mantel der Aussenhülse. Der Haltering hat einen bauchigen Aussenumfang und ist vorzugsweise zur Erleichterung des Einbringens in die Nut des Stössels mit einem Schlitz versehen. Vorgesehen ist eine Kappe mit einer Deckfläche und einem hülsenförmigen Schaft, an dessen freien Ende sich eine Innenkontur befindet und ein sich bis zur Deckfläche erstreckender Hohlraum austritt. Der Schaft der Kappe durchragt das Griffstück des Betätigungselements und ragt in dessen Axialdurchgang hinein. Die Innenkontur des Kappenschafts umfasst klemmend den bauchigen Aussenumfang des Halterings. Vom Stössel kommen ein Endabschnitt, ein angrenzendes erstes Ringsegment und der Bereich der Nut im Kappenhohlraum zu liegen. Das Griffstück des Betätigungselements hat die Gestalt eines Handrads mit einer Aussenprofilierung als Rutschhemmung. Die Markierzone ist farbig gestaltet.

Alternativ ist die Verbindung zwischen Betätigungselement und Stössel als einstückiger Übergang des Schafts des Betätigungselements in den dritten Abschnitt des Stössels vorhanden. Somit bilden Betätigungselement und Stössel ein fest zusammenhängendes einziges Teil. Das Betätigungselement besitzt einerseits ein von aussen zugängliches Griffstück und andererseits den zylindrischen Schaft, wobei beide durch ein Mittelstück verbunden sind. Der Schaft ist mit einem Aussengewinde versehen, welches mit einem Innengewinde an der Innenhülse in Eingriff steht. Das Mittelstück besitzt am Übergang zum Schaft eine Nut zur Aufnahme einer zweiten Dichtung mit der Abdichtfunktion gegenüber der Durchgangsöffnung im Mantel der Aussenhülse.

Die essentiellen Vorteile der erfindungsgemässe Ventilkonstruktion bestehen darin, dass:
- im Ventil, insbesondere in der Stellung "geschlossen", kein Totraum gebildet wird;
- der Schlauchanschluss, aus welchem das zu entleerende Medium austritt, in seiner Ausrichtung einstellbar ist; und
- die Strömung des Mediums in jedem Fall auf die Hauptdichtung in Richtung ihres bestimmungsgemässen Sitzes wirkt.

### Kurzbeschreibung der beigefügten Zeichnungen

Es zeigen:
- Figur 1A: ein erfindungsgemässes Entleerventil *erster Variante,* in der Stellung "geschlossen", also mit "Nullhub", in Perspektivansicht;
- Figur 1B: das Entleerventil gemäss Figur 1A, in gewechselter Perspektivansicht;
- Figur 1C: das Entleerventil gemäss Figur 1B, mit im Winkel verstellter Tülle, in Perspektivansicht;
- Figur 2A: das Entleerventil *erster Variante,* in der Stellung "völlig offen", also im "Maximalhub", in Perspektivansicht;
- Figur 2B: das Entleerventil gemäss Figur 2A, in gewechselter Perspektivansicht;
- Figur 2C: das Entleerventil gemäss Figur 2A, mit im Winkel verstellter Tülle, in Perspektivansicht;
- Figur 3A: das Entleerventil gemäss Figur 1A, in perspektivischer Explosivdarstellung;
- Figur 3B: den Aufbau gemäss Figur 3A, im perspektivischen Vertikalschnitt;

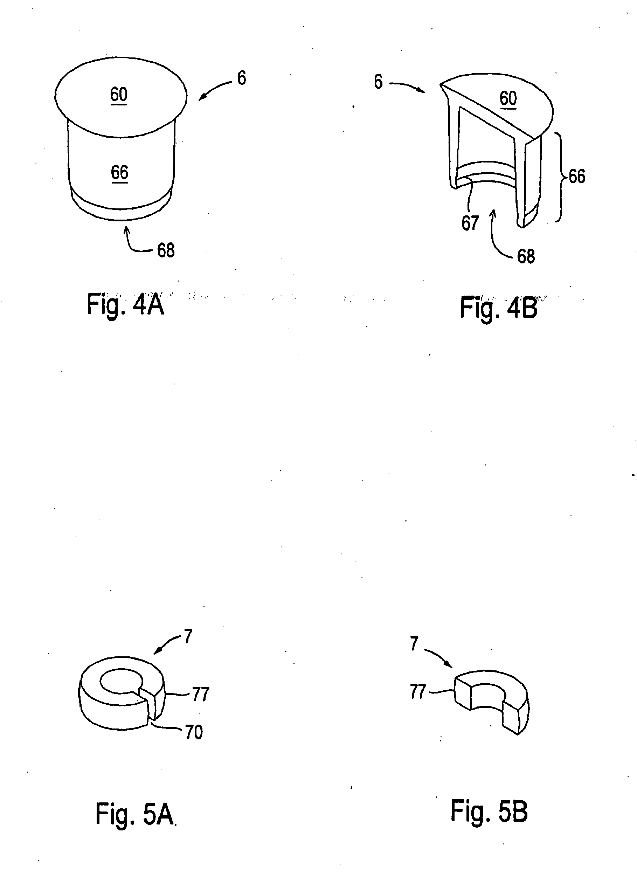

- Figur 4A: die Kappe gemäss Figur 3A, in Perspektivansicht;
- Figur 4B: die Kappe gemäss Figur 4A, im perspektivischen Vertikalschnitt;
- Figur 5A: den Haltering gemäss Figur 3A, in Perspektivansicht;
- Figur 5B: den Haltering gemäss Figur 5A, im perspektivischen Vertikalschnitt;

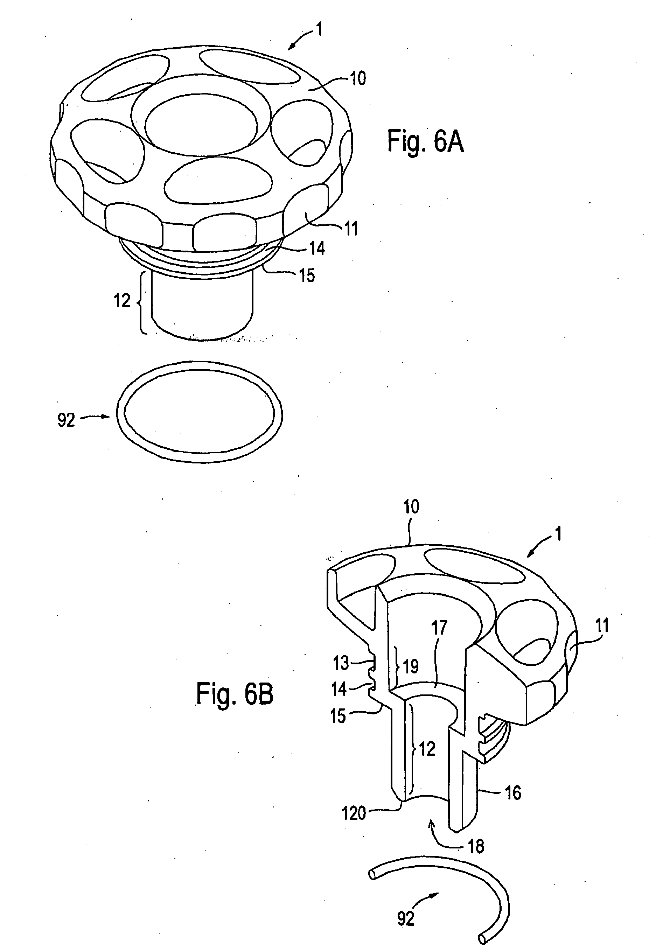

- Figur 6A: das Betätigungselement und die zweite Dichtung gemäss Figur 3A, in Perspektivansicht;
- Figur 6B: das Betätigungselement und die zweite Dichtung gemäss Figur 6A, im perspektivischen Vertikalschnitt;

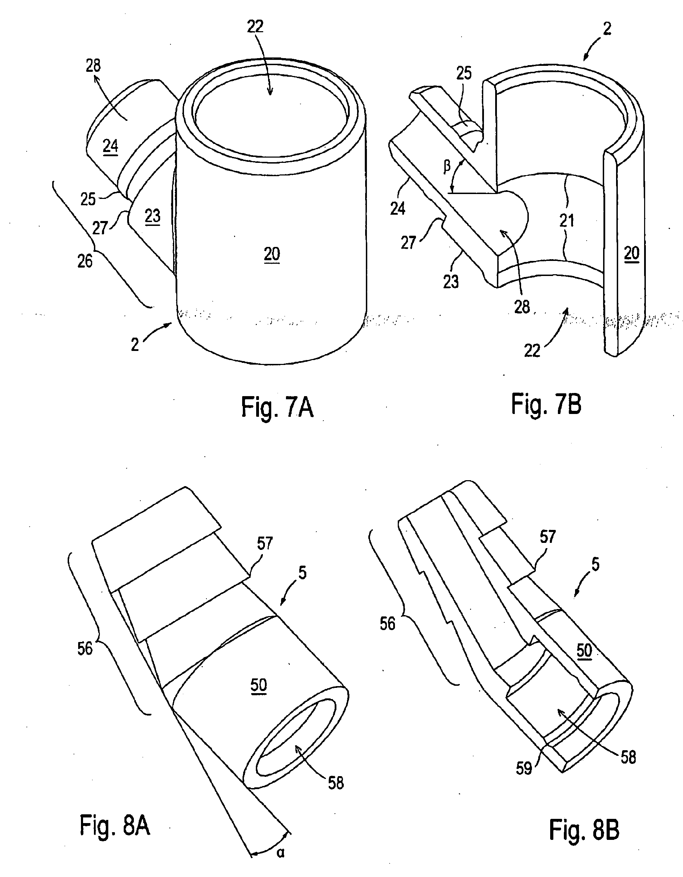

- Figur 7A: die Aussenhülse gemäss Figur 3A, in Perspektivansicht;
- Figur 7B: die Aussenhülse gemäss Figur 7A, im perspektivischen Vertikalschnitt;
- Figur 8A: die Tülle gemäss Figur 3A, in Perspektivansicht;
- Figur 8B: die Tülle gemäss Figur 8A, im perspektivischen Vertikalschnitt;

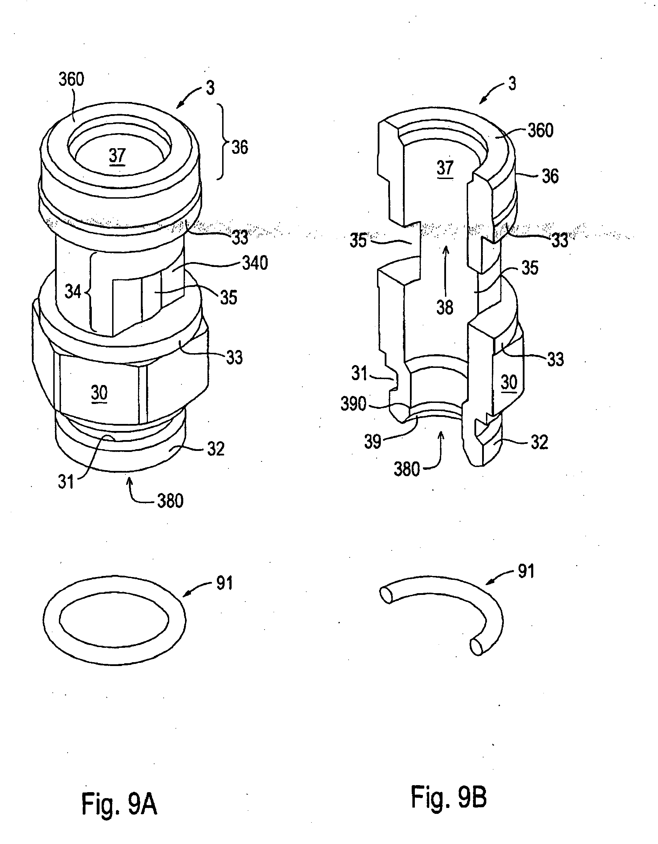

- Figur 9A: die Innenhülse und die erste Dichtung gemäss Figur 3A, in Perspektivansicht;
- Figur 9B: die Innenhülse und die erste Dichtung gemäss Figur 9A, im perspektivischen Vertikalschnitt;

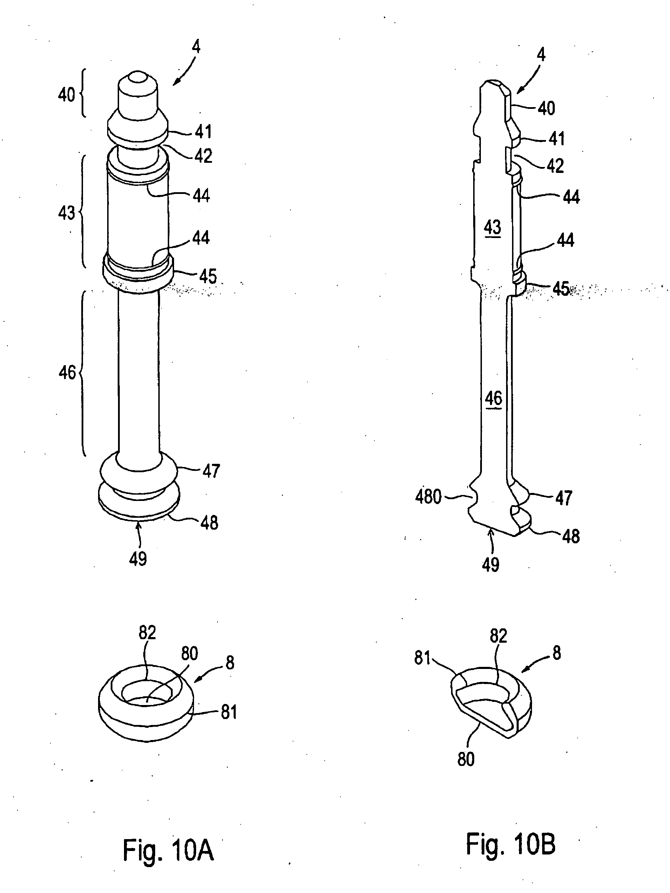

- Figur 10A: den Stössel und die Hauptdichtung gemäss Figur 3A, in Perspektivansicht;
- Figur 10B: den Stössel und die Hauptdichtung gemäss Figur 10A, im perspektivischen Vertikalschnitt;

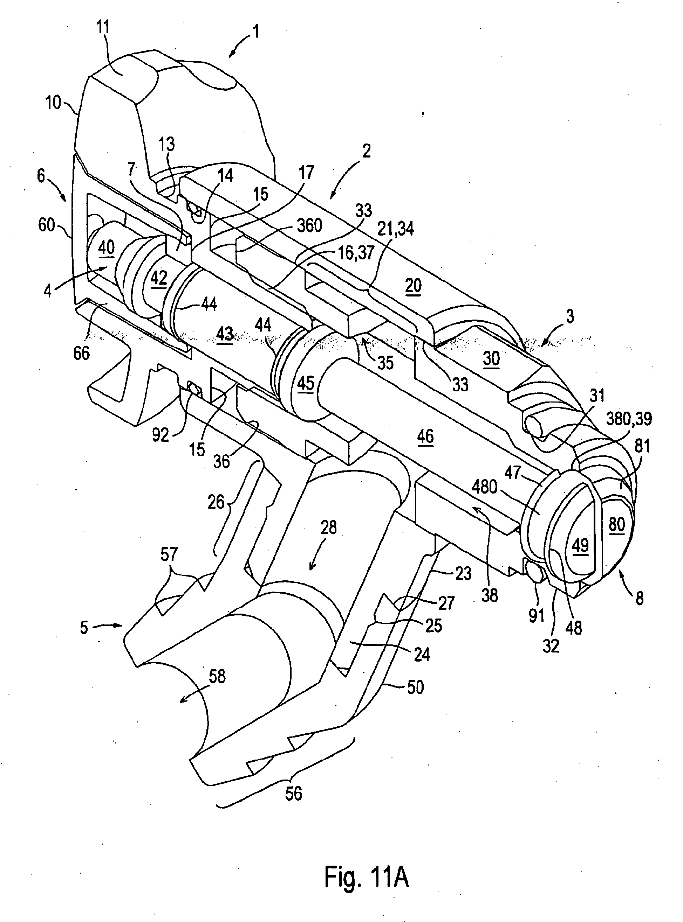

- Figur 11A: das Entleerventil gemäss Figur 1A, in der Stellung "geschlossen", im perspektivischen Vertikalschnitt;

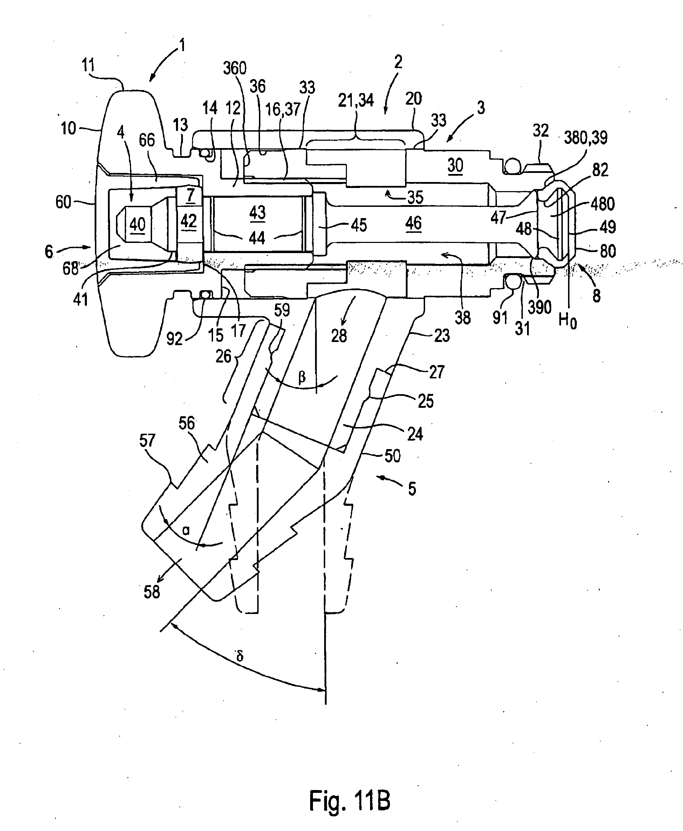

- Figur 11B: das Entleerventil gemäss Figur 11A, im Vertikalschnitt;

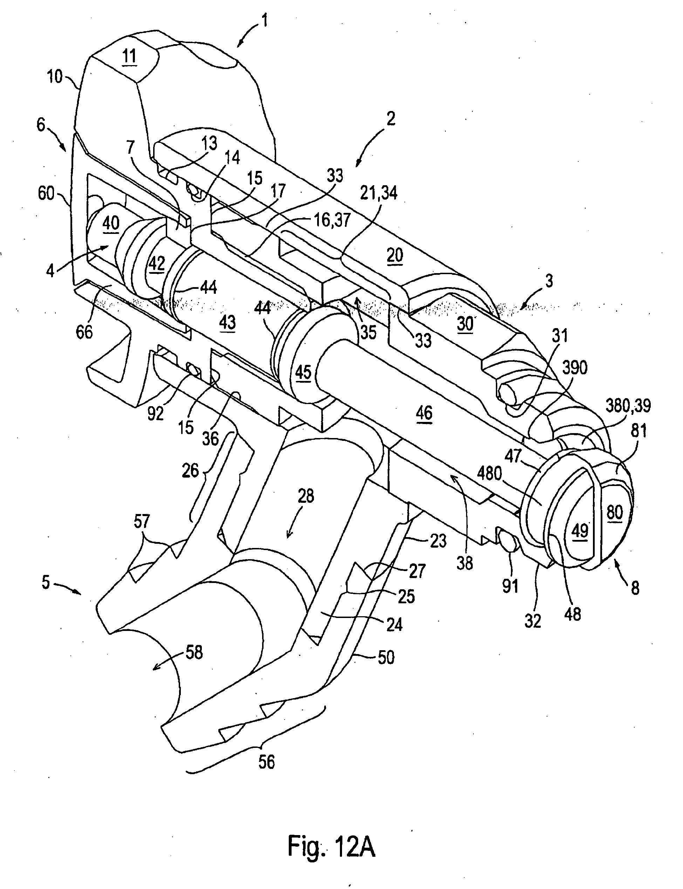

- Figur 12A: das Entleerventil gemäss Figur 2A, in der Stellung "völlig offen", im perspektivischen Vertikalschnitt;

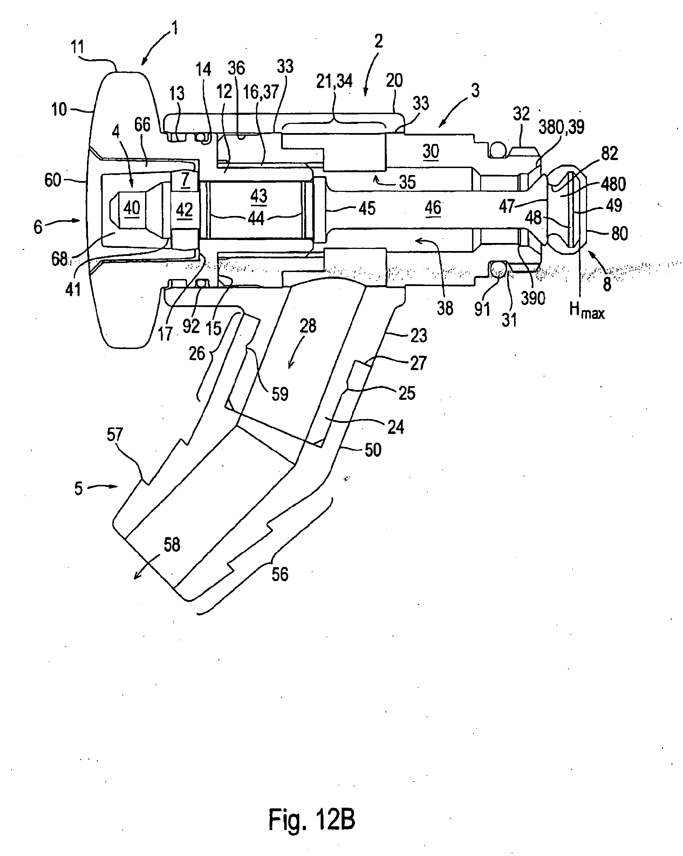

- Figur 12B: das Entleerventil gemäss Figur 12A, im Vertikalschnitt;

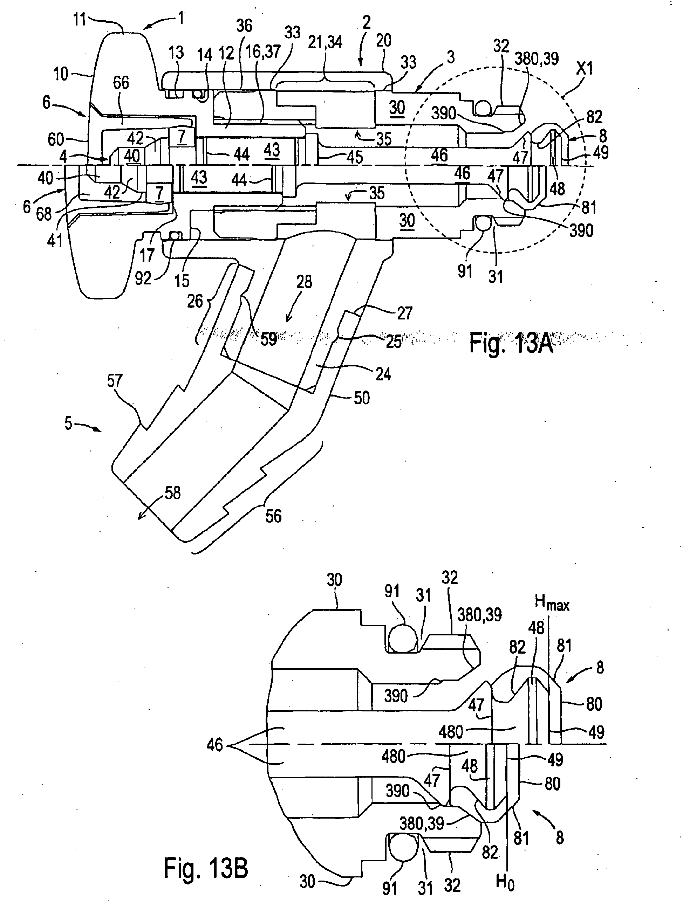

- Figur 13A: das Entleerventil gemäss den Figuren 11B und 12B, im Vertikalschnitt als Prinzipdarstellung, mit der oberen Hälfte in der Stellung "völlig offen" und der unteren Hälfte in der Stellung "geschlossen";
- Figur 13B: das vergrösserte Detail X1 aus Figur 13A;
- Figuren 14A bis 14F: die Montagefolge des Entleerventils *erster Variante* gemäss Figur 1A bis 13B, in Perspektivansicht;

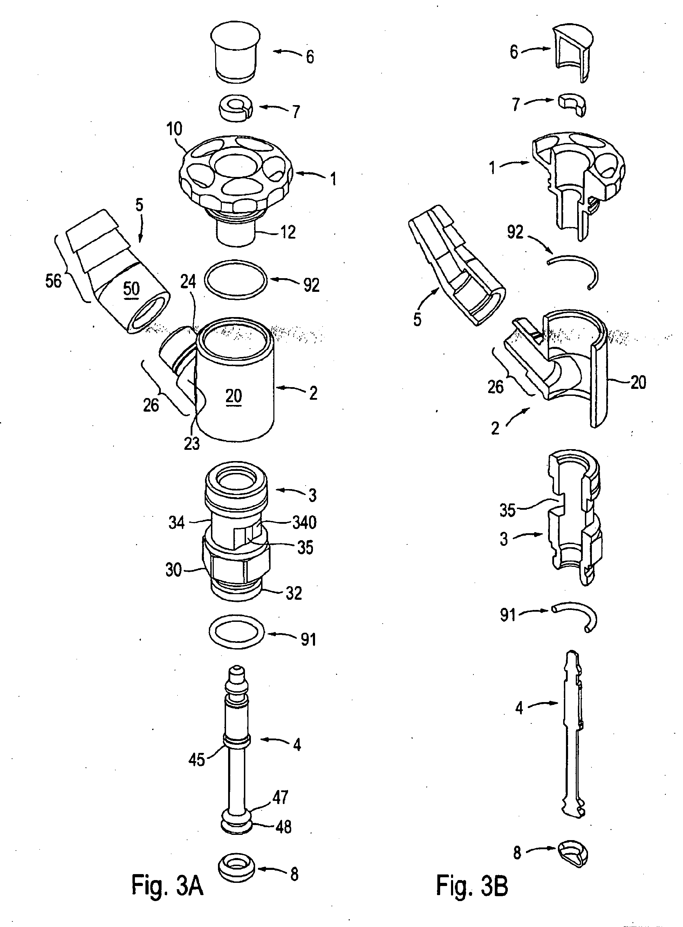

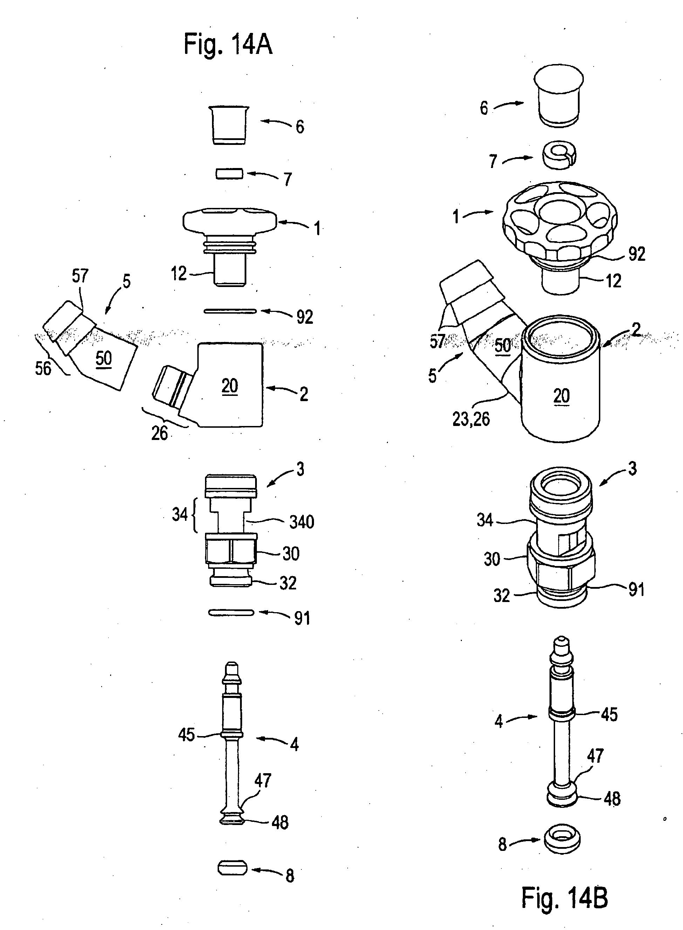

- Figur 14A: erster Montageschritt, mit Bereitstellung aller Einzelteile gemäss Figur 3A;
- Figur 14B: zweiter Montageschritt, mit Einlegen der ersten Dichtung in die Innenhülse und der zweiten Dichtung in das Betätigungselement sowie Aufstecken der Tülle auf den Ausflussstutzen;

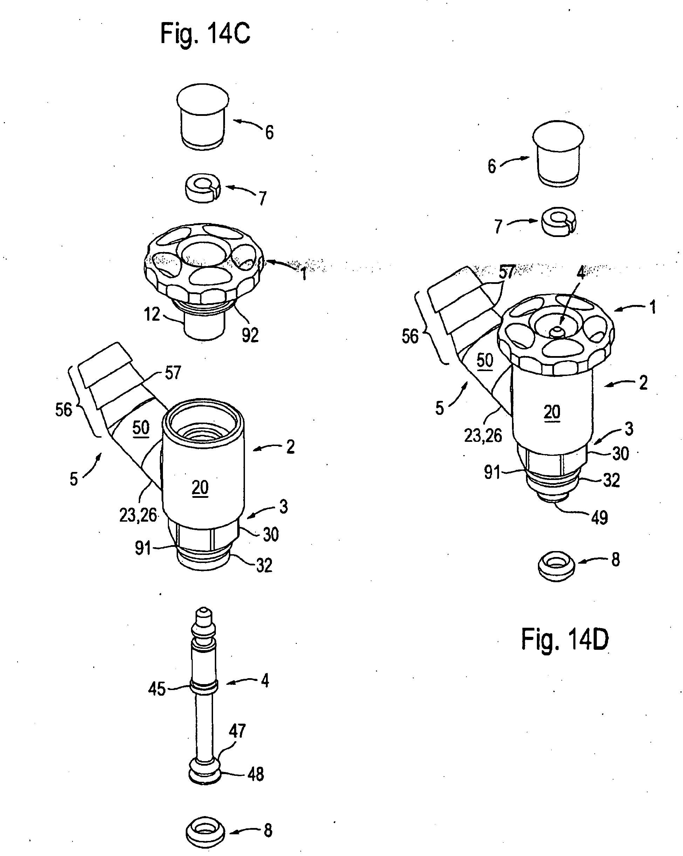

- Figur 14C: dritter Montageschritt, mit Aufstecken der Aussenhülse auf die Innenhülse;
- Figur 14D: vierter Montageschritt, mit Einstecken des Stössels und Einschrauben des Betätigungselements in die Innenhülse;

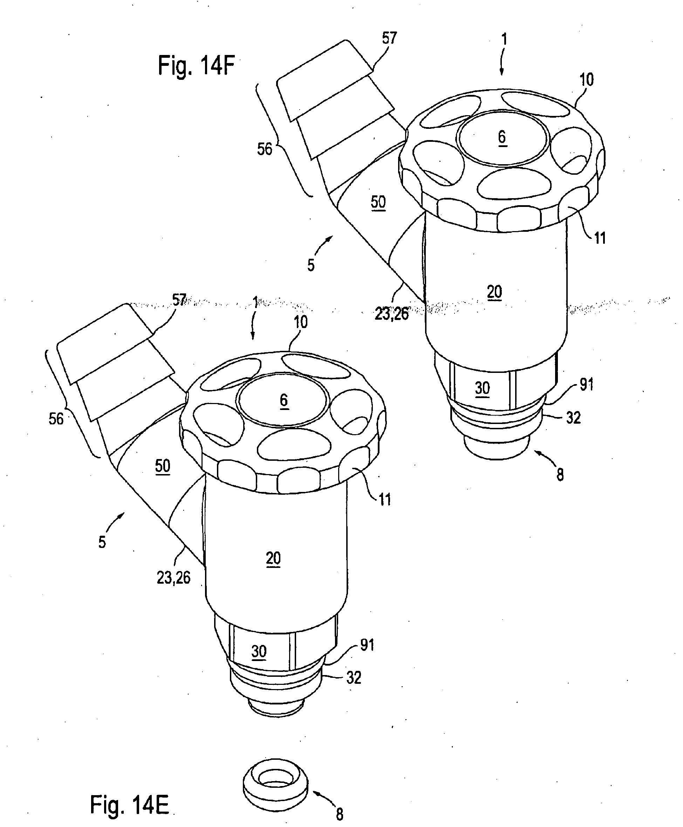

- Figur 14E: fünfter Montageschritt, mit Aufstecken des Halterings auf den Stössel und Einsetzen der Kappe in das Betätigungselements;
- Figur 14F: sechster Montageschritt, mit Aufstecken der Hauptdichtung auf den Stössel;

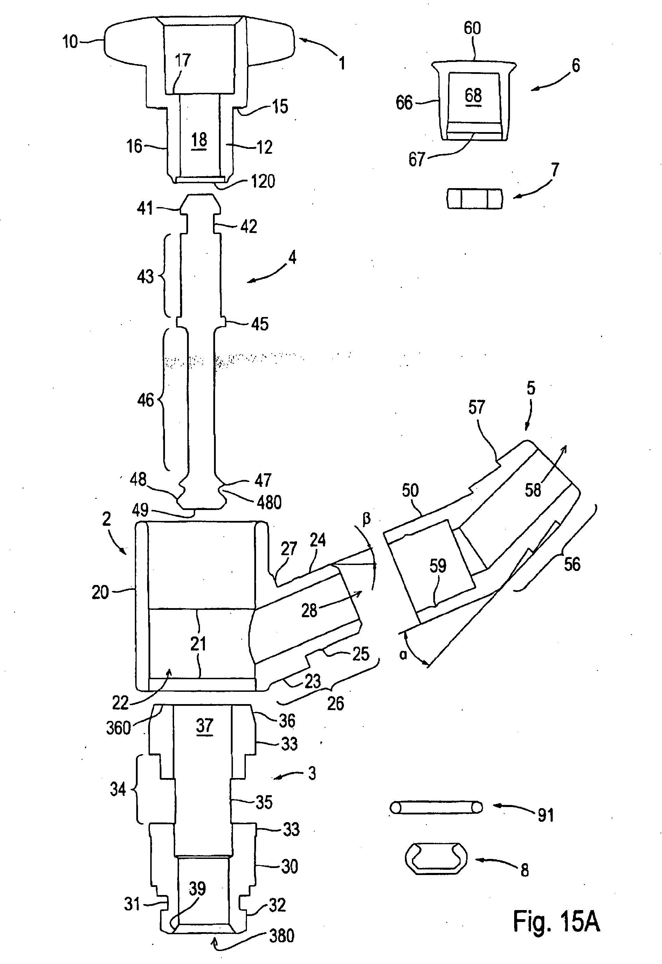

- Figuren 15A bis 15C: die Montagefolge des Entleerventils *zweiter Variante,* verkürzt dargestellt;
- Figur 15A: erster Montageschritt, mit Bereitstellung aller Einzelteile des Entleerventils;

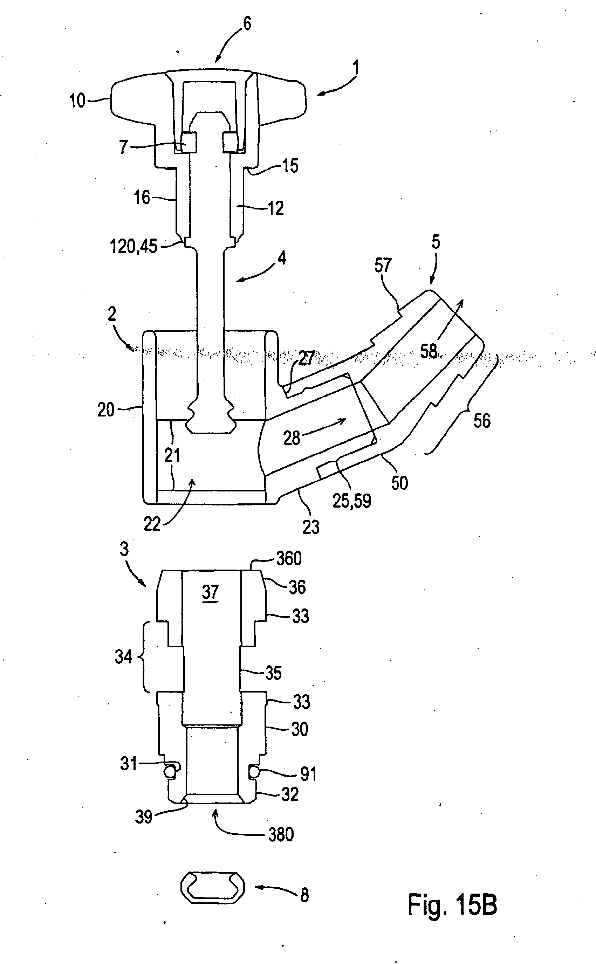

- Figur 15B: zweiter Montageschritt, mit Einlegen der ersten Dichtung in die Innenhülse, Einsetzen des Stössels in das Betätigungselement, Aufstecken des Halterings auf den Stössel, Einsetzen der Kappe in das Betätigungselement und Aufstecken der Tülle auf den Ausflussstutzen;

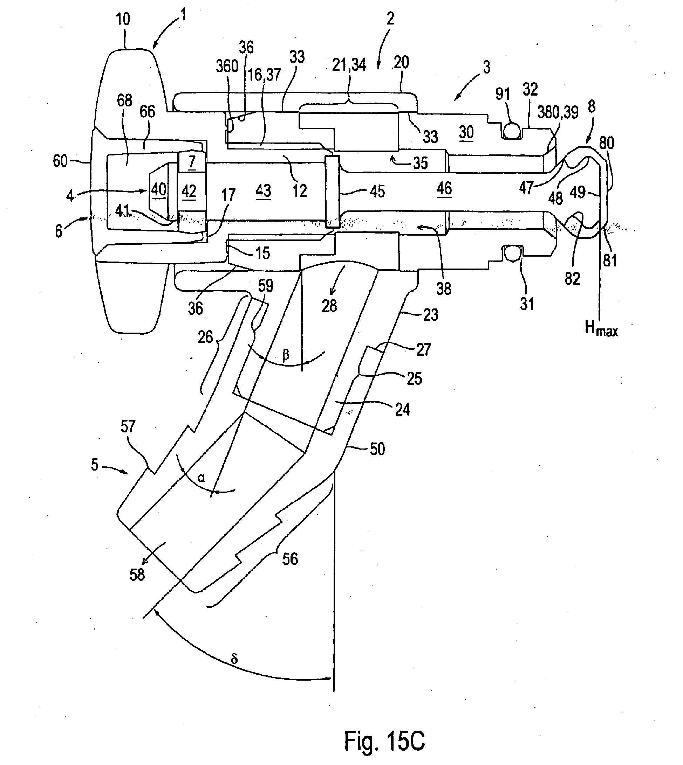

- Figur 15C: dritter Montageschritt, mit Einstecken der Innenhülse in die Aussenhülse, Einschrauben des Betätigungselements mit dem Stössel in die Innenhülse und Aufstecken der Hauptdichtung auf den Stössel;

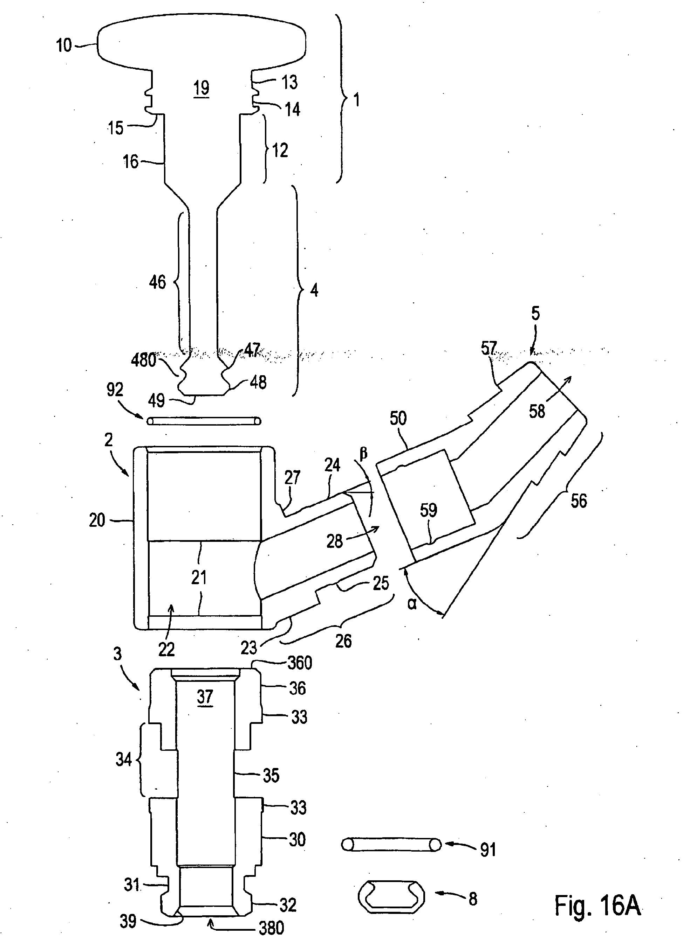

- Figuren 16A bis 16D: die Montagefolge des Entleerventils *dritter Variante,* verkürzt dargestellt;
- Figur 16A: erster Montageschritt, mit Bereitstellung aller Einzelteile des Entleerventils;

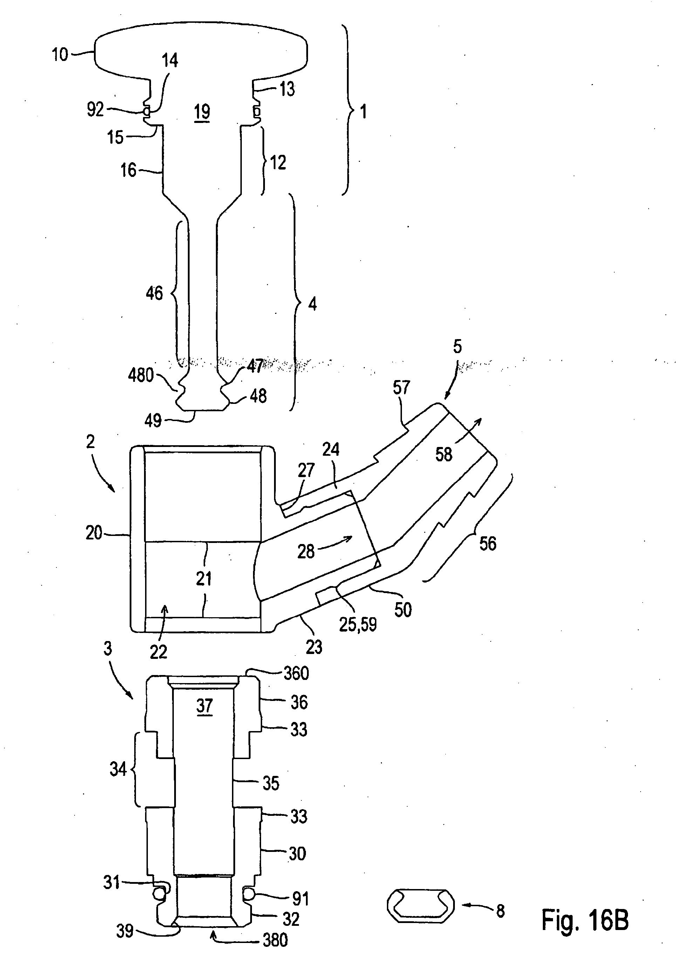

- Figur 16B: zweiter Montageschritt, mit Einlegen der ersten Dichtung in die Innenhülse und der zweiten Dichtung in das Betätigungselement sowie Aufstecken der Tülle auf den Ausflussstutzen;

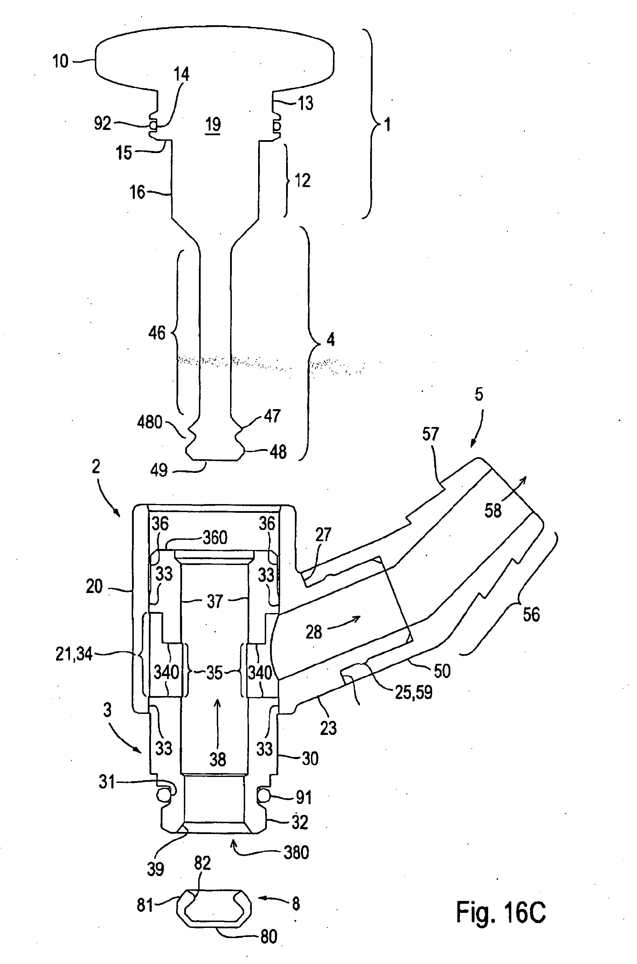

- Figur 16C: dritter Montageschritt, mit Einstecken der Innenhülse in die Aussenhülse; und

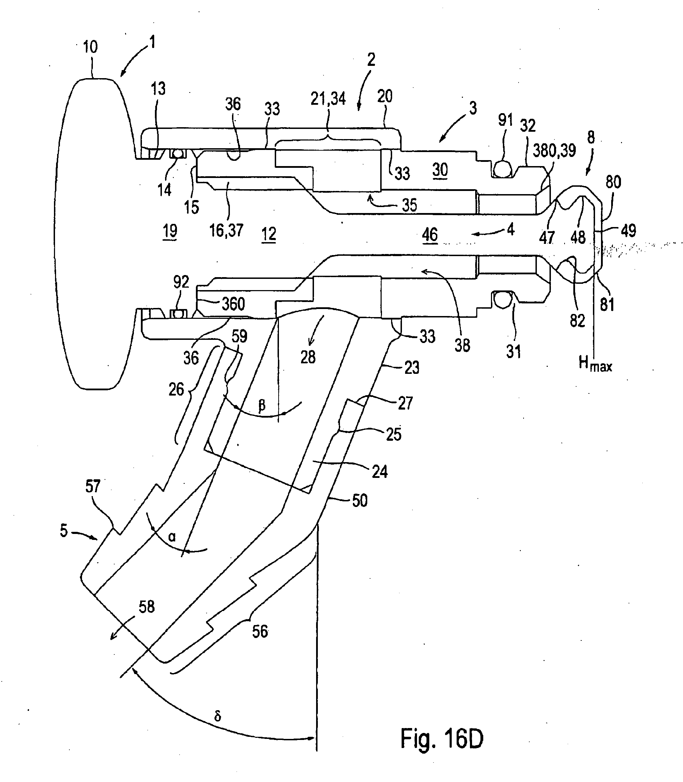

- Figur 16D: vierter Montageschritt, Einschrauben des Betätigungselements mit dem Stössel in die Innenhülse und Aufstecken der Hauptdichtung auf den Stössel.

### Ausführungsbeispiele

Mit Bezug auf die beiliegenden Zeichnungen erfolgt nachstehend die detaillierte Beschreibung von Ausführungsbeispielen des erfindungsgemässen Entleerventils in drei verschiedenen Varianten.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figuren 1A bis 1C

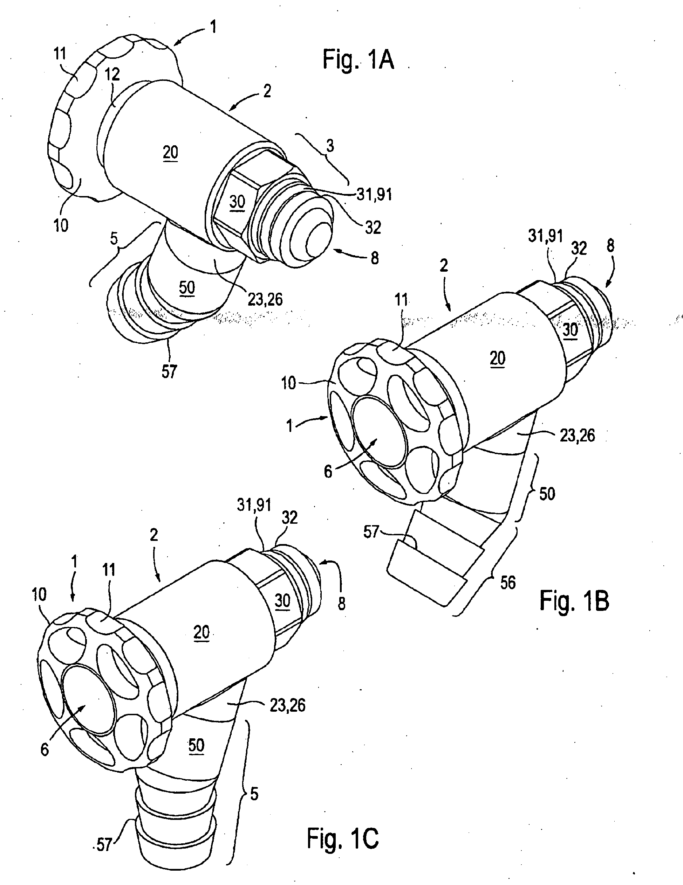

Das Entleerventil besteht prinzipiell aus einem Betätigungselement **1,** einer darin einsetzbaren Kappe **6,** einer Aussenhülse **2,** von der sich eine abgewinkelte Tülle **5** fortsetzt, einer in der Aussenhülse **2** fixierten Innenhülse **3,** wobei das Betätigungselement **1** mit der Innenhülse **3** in Gewindeeingriff steht, und einer Hauptdichtung **8.** Das Ventil befindet sich im Nullhub H₀, in geschlossener Stellung, so dass die Hauptdichtung **8** an der Innenhülse **3** anliegt und eine Abdichtung bewirkt. Das Betätigungselement **1** besteht aus einem Griffstück **10,** das an seiner vorzugsweise kreisrunden Umfangsfläche eine Aussenprofilierung **11** besitzt, die bei der Betätigung als Rutschhemmung dient. Im Anschluss an das Griffstück **10** erstreckt sich in Richtung der Hauptdichtung **8** ein zylindrischer Schaft **12.** Die Aussenhülse **2** hat einen umlaufenden, zylindrischen Mantel **20,** von dem der Ansatz **23** eines Ausflussstutzens **26** abzweigt. Die Innenhülse **3** besitzt eine Aussenprofilierung **30,** vorzugsweise in Form eines Sechskants, die zum Ansetzen eines Schraubenschlüssels dient. Im Anschluss an die Aussenprofilierung **30,** zur Hauptdichtung **8** hingewandt, befindet sich eine Nut **31,** in der die erste Dichtung **91** sitzt. Der Nut **31** mit der Dichtung **91** folgt ein Aussengewinde **32,** das für das Einschrauben des Ventils in einen Leitungsstutzen vorgesehen ist. Am Ausflussstutzen **26** ist die Tülle **5** aufsteckbar und in radialer Richtung frei drehbar, wobei die Tülle **5** einen Ansatz **50** besitzt, der in axialer Richtung des Ausflussstutzens **26** verläuft. Der Ansatz **50** geht in einem abknickenden Bereich in einen Schlauchanschluss **56** über, an dem Aussenprofilierungen **57** vorhanden sind, die zur Fixierung eines aufsteckbaren Schlauchs dienen. In Figur 1C ist die Tülle **5** gegenüber den beiden vorherigen Figuren im Winkel verstellt und steht nun senkrecht.

### Figuren 2A bis 2C

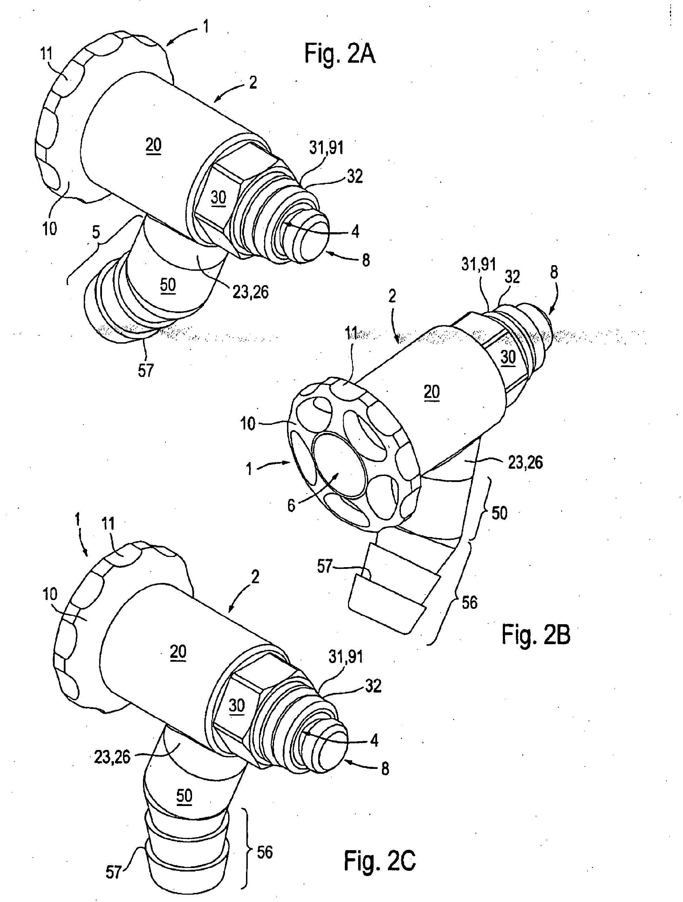

Jetzt befindet sich das Ventil im Maximalhub H_{max,} in völlig offener Stellung mit vollständig ausgefahrenem Stössel **4,** auf dem die Hauptdichtung **8** sitzt, wobei der Stössel **4** in der Innenhülse **3** teleskopisch aufgenommen ist, und diese axial durchragt. Die Hauptdichtung **8** liegt nicht mehr an der Dichtfläche an der Mündung der Innenhülse **3** an, so dass ein Strömungsspalt für das Ausfliessen des zu entleerenden Mediums vorhanden ist. In Figur 2C steht die Tülle **5** gegenüber den beiden vorherigen Figuren, nach Verdrehen, senkrecht.

### Figuren 3A und 3B

Ausgehend von einem Leitungsstutzen, mit dem das Ventil üblicherweise verbunden ist, setzt sich dieses aus folgenden Einzelbauteilen zusammen: der Hauptdichtung **8**, dem Stössel **4**, der ersten Dichtung **91**, der Innenhülse **3,** der Aussenhülse **2**, einer Tülle **5**, der zweiten Dichtung **92**, dem Betätigungselement **1**, dem Haltering **7** und der Kappe **6.** Der langgestreckte Stössel **4** hat als für die Funktion wesentliche Zonen einen ersten Kragen **48** und einen zweiten Kragen **47** sowie ein zweites Ringsegment **45.** Die Innenhülse **3** beginnt am unteren Ende mit dem Aussengewinde **32,** an das sich die Aussenprofilierung **30** anschliesst, der ein Mittelabschnitt **34** mit verringertem Aussendurchmesser folgt. Am Mittelabschnitt **34** sind zwei zueinander parallel liegende Abflachungen **340** vorhanden, die sich in axialer Richtung anteilig über den Mittelabschnitt **34** erstrecken und die Wandungsstärke soweit vermindern, bis zwei Durchbrüche als gegenüber liegende Ausflussöffnungen **35** entstehen. Die Aussenhülse **2** besitzt den hohlzylindrischen Mantel **20,** von dem abgewinkelt ein Ansatz **23** abgeht, der in einen Fortsatz **24** übergeht, wobei Ansatz **23** und Fortsatz **24** zusammen den Ausflussstutzen **26** bilden. Die Tülle **5** hat den zum Aufstecken auf den Fortsatz **24** des Ausflussstutzens **26** bestimmten Ansatz **50,** von dem sich abgewinkelt der Schlauchanschluss **56** erstreckt. Das Betätigungselement **1** wird mit der zweiten Dichtung **92** versehen und besteht im wesentlichen aus dem unteren Schaft **12** und dem Griffstück **10.**

### Figuren 4A und 4B

Die topfförmige Kappe **6** hat zunächst eine kreisrunde Deckfläche **60,** von der sich ein zylindrischer Schaft **66** erstreckt, welcher zum freien Ende hin offen ist und intern eine zirkulär umlaufende Innenkontur **67** hat. Vom Schaft **66** wird der durch die Deckfläche **60** begrenzte Hohlraum **68** umschlossen. Vorzugsweise ist die Kappe **6** aus Kunststoff gefertigt.

### Figuren 5A und 5B

Der Haltering **7** hat im Prinzip einen rechteckigen Querschnitt mit einem nach aussen gewölbtem Aussenumfang **77** und besitzt einen durchgehenden Schlitz **70,** so dass der Haltering **7** offen ist. Vorzugsweise besteht der Haltering **7** aus Kunststoff.

### Figuren 6A und 6B

Durch das Betätigungselement **1** mit dem handradähnlichen Griffstück **10,** das sich einerseits anschliessende Mittelstück **19** und den sich davon andererseits fortsetzenden hohlzylindrischen Schaft **12** erstreckt sich ein Axialdurchgang **18,** welcher an einer am freien Ende des Schafts **12** vorhandenen Ringschulter **120** mündet und andererseits an der Oberseite des Griffstücks **10** austritt. Am Schaft **12** verläuft ein Aussengewinde **16** bis unterhalb einer Aussenschulter **15**, an die sich das Mittelstück **19** anschliesst. Im Mittelstück **19** ist äusserlich eine umlaufende Nut **14** zur Aufnahme einer zweiten Dichtung **92** sowie eine umlaufende Markierzone **13** vorhanden, in welcher eine Farbmarkierung angebracht sein kann, die die jeweilige Stellung des Ventils optisch signalisiert. Zur Rutschhemmung ist das Griffstück **10** am äusseren Umfang mit der Aussenkontur **11** versehen ist, z.B. systematische Dellen. Im Axialdurchgang **18** befindet sich auf der Höhe der Nut **14** eine Innenschulter **17,** so dass sich der Innendurchmesser des Axialdurchgangs **18** hin zum Griffstück **10** erweitert. Vorzugsweise ist das gesamte Betätigungselement **1** als einstückiges Kunststoffteil hergestellt.

### Figuren 7A und 7B

Die an sich einteilige Aussenhülse **2** gliedert sich in den rohrförmigen Mantel **20,** durch den sich die Durchgangsöffnung **22** erstreckt, sowie den vom Mantel **20** im Winkel abzweigenden Ausflussstutzen **26,** durch den der innere Kanal **28** verläuft, welcher einerseits in die Durchgangsöffnung **22** mündet und andererseits aus dem am freien Ende des Ausflussstutzens **26** befindlichen Fortsatz **24** austritt. Unmittelbar vom Mantel **20** zweigt der Ansatz **23** ab, der zusammen mit dem Fortsatz **24** den Ausflussstutzen **26** ergibt. Zwischen dem Ausflussstutzen 26 und der auf den Mantel **20** gerichteten Senkrechten ist ein Stutzenwinkel β von z.B. 22.5° ausgebildet. Im Bereich des Eintritts des Kanals **28** in die Durchgangsöffnung **22** des Mantels **20** hat dieser einen ringförmigen inneren Bund **21,** wodurch sich die lichte Weite minim verringert. Am Übergang zwischen dem Ansatz **23** und dem im Aussendurchmesser kleineren Fortsatz **24** ist eine Ringschulter vorhanden, die einen Anschlag **27** darstellt. Äusserlich besitzt der Fortsatz **24** eine radial umlaufende Wulst, welche die Funktion einer Haltekontur **25** hat.

### Figuren 8A und 8B

Die vorteilhaft als Kunststoff-Spritzgiessteil hergestellte Tülle **5** mit dem durchgehenden Kanal **58** strukturiert sich in einen zylindrischen Ansatz **50** und den sich davon im Tüllenwinkel α von z.B. 22.5° abgewinkelt erstreckenden Schlauchanschluss **56.** Innerlich des Ansatzes **50** ist eine radial umlaufende Nut als Gegenkontur **59** vorhanden. Der Tüllenwinkel α und der Stutzenwinkel β haben vorteilhaft die gleichen Werte, wobei die Winkelwerte vorzugsweise < 45° sind, so dass der Schlauchanschluss **56** in jeder Drehstellung vom Ventil wegweist.

### Figuren 9A und 9B

Durch die vorzugsweise metallische Innenhülse **3** verläuft ein Axialdurchgang **38,** der einerseits an der Eintrittsmündung **380** beginnt und hier eine in das Innere der Hülse **3** gewandte Dichtfläche **39** hat, welche sich nach aussen konisch öffnet. Benachbart zur Dichtfläche **39** ist eine Anschlagschulter **390** vorgesehen, die durch eine dahinter liegende Verengung der lichten Weite im Axialdurchgang **38** entsteht. Von der Eintrittsmündung **380** verläuft ein Aussengewinde **32** bis zu einer äusseren Nut **31,** welche zur Aufnahme der ersten Dichtung **91** dient. Nach einem Übergang folgt der Nut **31** eine Aussenprofilierung **30,** vorzugsweise ein Sechskant zum Ansetzen eines Werkzeugs beim Einbau des Ventils in einen Leitungsstutzen.

An die Aussenprofilierung **30** grenzt ein unterer äusserer Bund **33** an, der gegenüber der Schlüsselweite der Aussenprofilierung **30** im Durchmesser minim erweitert ist. Andererseits liegt benachbart zum unteren äusseren Bund **33** ein Mittelabschnitt **34** mit erheblich vermindertem Aussendurchmesser, wobei sich der Mittelabschnitt **34** bis zu einem oberen äusseren Bund **33** erstreckt und beide Bunde **33** den gleichen Aussendurchmesser aufweisen. Der Mittelabschnitt **34** hat zwei zueinander parallel liegende Abflachungen **340,** die in axialer Richtung vom unteren äusseren Bund **33** anteilig über den Mittelabschnitt **34** verlaufen und mit Abstand vor dem oberen äusseren Bund **33** enden. Hierbei ist die Wandungsstärke an den Abflachungen **340** soweit vermindert, bis zwei Durchbrüche als gegenüber liegende Ausflussöffnungen **35** entstehen. Gegenüber der Eintrittsmündung **380** endet die Innenhülse **3** an einer Ringschulter **360.** Im zur Ringschulter **360** angrenzenden Bereich hat die Innenhülse **3** einen vermindertem Aussendurchmesser, so dass eine umlaufende Freifläche **36** entsteht, die sich in Richtung Hülsenmitte bis zum oberen äusseren Bund **33** ausdehnt. Am der Eintrittsmündung **380** gegenüber liegenden Ende hat die Innenhülse **3** ein Innengewinde **37,** das sich im Axialdurchgang **38** bis an die Ausflussöffnungen **35** erstreckt.

### Figuren 10A und 10B

Der vorzugsweise ebenfalls aus Metall gefertigte Stössel **4** ist ein Rotationssymmetrischer langgestreckter Vollkörper und beginnt mit einem zylindrischen Endabschnitt **40,** dem nach konischem Übergang ein erstes Ringsegment **41** folgt. An das Ringsegment **41** schliesst sich eine zweite Nut **42** an, der mit vergrössertem Aussendurchmesser ein zweiter Abschnitt **43** folgt, auf dem zwei voneinander beabstandete umlaufende Radialwulste **44** liegen und der an ein im Durchmesser vergrössertes zweites Ringsegment **45** angrenzt. Vom zweiten Ringsegment **45** erstreckt sich ein dritter Abschnitt **46,** welcher den längsten gleichförmigen Bereich am Stössel **4** darstellt, bis zu einem zweiten Kragen **47,** der vom dritten Abschnitt **46** nach konischem Übergang auf einen vergrösserten Durchmesser angewachsen ist. Dem zweiten Kragen **47** ist ein erster Kragen **48** vorgesetzt, der abschliessend eine Stirnfläche **49** hat, wobei zwischen den Krägen **47,48** eine erste Nut **480** liegt.

Die zum Umfassen des ersten Kragens **48** bestimmte kappenförmige Hauptdichtung **8** hat eine Bodenfläche **80,** die von einer Seitenwand **81** radial umrandet wird. Am freien oberen Ende verdickt sich die Seitenwand **81,** so dass ein nach innen zeigender verengter Innenrand **82** entsteht.

### Figuren 11A, 11B und 14A bis 14F

Das Figurenpaar 11A und 11B zeigt das zusammengebaute Ventil in geschlossener Stellung, also mit vollständig eingefahrenem Stössel **4** im Nullhub H₀. Der Montageablauf gemäss der Figurenfolge **14A** bis **14F** wird für die gleichzeitige Beschreibung des Zusammenwirkens der Bauteile herangezogen.

### Figur 14A-erster Montageschritt

Alle Einzelteile gemäss Figur 3A sind bereitgestellt, nämlich jeweils ein Stück: Hauptdichtung **8,** Stössel **4,** erste Dichtung **91,** Innenhülse **3,** Aussenhülse **2,** Tülle **5,** zweite Dichtung **92,** Betätigungselement **1,** Haltering **7** und Kappe **6.**

### Figur 14B - zweiter Montageschritt

Zunächst wird die erste Dichtung **91** in die Nut **31** an der Innenhülse **3** und die zweite Dichtung **92** in die Nut **14** am Betätigungselement **1** eingelegt. Ferner wird die Tülle **5** auf den Ausflussstutzen **26** aufgesteckt, bis die umlaufende Haltekontur **25** am Fortsatz **24** der Aussenhülse **2** in der im Axialdurchgang **58** vorhandenen Gegenkontur 59 einrastet und die Stirnfläche des Ansatzes **50** der Tülle **5** am Anschlag **27** des Ansatzes **23** der Aussenhülse **2** anliegt. Der vom Schlauchanschluss **56** dabei eingenommene Anschlusswinkel δ kann bis zur Inbetriebnahme des Ventils unbeachtet bleiben.

### Figur 14C-dritter Montageschritt

Die Aussenhülse **2** wird soweit über die Innenhülse **3** gesteckt, dass der in der Durchgangsöffnung **22** der Aussenhülse **2** vorhandene Bund **21** mit seiner verringerten lichten Weite in den zwischen den beiden äusseren Bunden **33** liegenden Mittelabschnitt **34** der Innenhülse **3** einschnappt und eine axial feste, jedoch radial drehbare Fixierung der Aussenhülse **2** auf der Innenhülse **3** ergibt. Die dabei zwischen der Aussenhülse **2** und der Innenhülse **3** eingenommene relative Drehstellung ist bis zur Inbetriebnahme des Ventils nicht relevant. Die sich von der Ringschulter **360** bis zum nächstliegenden, oberen äusseren Bund **33** erstreckende Freifläche **36** verringert die Kontaktfläche zur Innenwandung der Aussenhülse **2,** so dass die Drehung der Aussenhülse **2** leichtgängiger wird.

### Figur 14D - vierter Montageschritt

Der Stössel **4** wird mit seinem Endabschnitt **40** voran vonseiten der Eintrittsmündung **380** maximal in den Axialdurchgang **38** der Innenhülse **3** eingeführt bis der zweite Kragen **47** des Stössels **4** gegen die Anschlagschulter **390** in der Innenhülse **3** anschlägt. Nun wird der Schaft **12** des Betätigungselements **1,** in seinem Axialdurchgang **18** den Endabschnitt **40** bis anteilig den zweiten Abschnitt **43** des Stössels **4** aufnehmend, sukzessive mit dem Aussengewinde **16** in das Innengewinde **37** der Innenhülse **3** eingeschraubt, bis die Ringschulter **120** als vorderster Abschluss des Schafts **12** am zweiten Ringsegment **45** des Stössels **4** anschlägt. Ein zu den Ausflussöffnungen **35** benachbarter Abschnitt des Innengewindes **37** der Innenhülse **3** ist noch nicht mit dem Aussengewinde **16** des Schafts **12** in Eingriff. Die Radialwülste **44** des Stössels **4,** mit der Funktion zusätzlicher Dichtung, kommen an der Innenwandung des Schafts **12** zu liegen und die zweite Stösselnut **42** steht im Mittelstück **19** vor der Innenschulter **17.** Zwischen der Aussenschulter **15** des Mittelstücks **19** und der Ringschulter 360 der Innenhülse **3** verbleibt bei geschlossener Ventilstellung ein maximaler Ringspalt. Ausserdem ist das Mittelstück **19** soweit in den Mantel **20** eingefahren, dass die zweite Dichtung **92** nahe vor dem Ausgang der Durchgangsöffnung **22** liegt, jedoch die Markierzone **13** des Mittelstücks **19** von aussen in vollständiger Breite zu sehen ist. Optisch besonders wahrnehmbar ist eine farbig gestaltete Markierzone **13.** Die zweite Dichtung **92** soll den Austritt von Medium verhindern, das über die ineinander greifenden Gewinde **16,37** und/oder am oberen äusseren Bund **33** vorbei, als Leckage bis an die zweite Dichtung 92 gelangen könnte.

### Figur 14E - fünfter Montageschritt

Vonseiten des Griffstücks **10** wird der Haltering **7** in den Axialdurchgang **18** eingeführt und dabei über den Endabschnitt **40** des Stössels **4** bis in die zweite Nut **42** geschoben, wobei der kegelförmige Übergang zum ersten Ringsegment **41** das Aufschieben des Halterings **7** unter momentaner elastischer Aufweitung des Schlitzes **70** erleichtert. Zugleich steht der Haltering **7** an der Innenschulter **17** an. Anschliessend wird der Schaft **66** der Kappe **6** vonseiten des Griffstücks **10** in den Axialdurchgang **18** geschoben bis die Innenkontur **67** der Kappe **6** über den bauchigen Aussenumfang **77** des Halterings **7** schnappt und somit die Kappe **6** dadurch fixiert ist, wobei durch den äusseren Andruck der Haltering **7** eine zusätzliche Sicherung erfährt. Von der Innenschulter **17** hin zum Griffstück **10** ist der Axialdurchgang **18** zylinderförmig zur Aufnahme der Kappe **6** erweitert. Der Haltering **7** sowie die am Ringsegment **45** anstehende Ringschulter **120** fixieren den Stössel **4** in axialer Richtung. Durch die aufgesetzte Kappe **6** ist der im Griffstück **10** austretende Axialdurchgang **18** verschlossen und das Innere abgedeckt.

### Figur 14F - sechster Montageschritt

Um die aus elastischem Material bestehende Hauptdichtung **8** am Stössel **4** zu montieren, wird der Stössel **4** durch Drehen am Betätigungselement **1** in die offene Ventilstellung - zum Maximalhub **Hₘₐₓ** - bewegt, so dass nicht nur der erste Kragen **48,** sondern auch die benachbarte erste Nut **480** und der zweite Kragen **47** nach aussen, vor die Eintrittsmündung **380** gelangen. Nun wird die Hauptdichtung **8** mit der offenen Seite, auf die Stirnfläche **49** des Stössels **4** gerichtet, über den ersten Kragen **48** gestülpt, bis die Bodenfläche **80** an der Stirnfläche **49** liegt, die Seitenwand **81** den ersten Kragen **48** vollständig umgreift und sich der Innenrand **82** in der ersten Nut **480** nach vorheriger Aufweitung wieder elastisch verengt.

Auf die geschlossene Ventilstellung - vollständig eingefahrener Stössel 4 im Nullhub **H₀ -** zurückkommend, wird nun die Funktionsweise des Ventils bei gedachter Einbausituation, in welcher das Aussengewinde **32** der Innenhülse **3** in einen Leitungsstutzen eingeschraubt ist, betrachtet. Von der Seitenwand **81** der Hauptdichtung **8** ist ein äusserer Bereich gegen die Dichtfläche **39** in der Eintrittsmündung **380** gepresst, so dass kein Durchlass für ein anstehendes Medium besteht. Mit dem Anstossen des zweiten Kragens **47** an die Anschlagschulter **390** der Innenhülse **3** wird eine Überbeanspruchung der Hauptdichtung **8** vermieden. Sollte die Hauptdichtung **8** abgenutzt oder beschädigt sein, so bewirkt der an der Anschlagschulter **390** aufsitzende zweite Kragen **47** eine zumindest behelfsmässige metallische Abdichtung. Ein im Ventil vorhandener Mediumsrest kann über die Ausflussöffnungen **35** in der Innenhülse **3** und den Kanal **28** der Aussenhülse **2,** weiter durch den Kanal **58** der Tülle 5 abfliessen.

Durch die Schwenkbarkeit der abgewinkelten Tülle **5** am abgewinkelt von der Aussenhülse **2** abgehenden Ausflussstutzen **26,** wird eine Ausrichtung des Schlauchanschlusses **56** mit einstellbarem Anschlusswinkel δ ermöglicht. Mit z.B. Tüllenwinkelwinkel α = Stutzenwinkel β = 22.5° lässt sich der Schlauchanschluss **56** mit einem Anschlusswinkel δ im Bereich von 0° (Schlauchanschluss **56** gestrichelt gezeichnet) bis 45° (Schlauchanschluss **56** in Volllinie gezeichnet) einstellen, bezogen auf die Senkrechte zur Längserstreckung des Ventils.

### Figuren 12A bis 13B

Diese Figurenfolge zeigt das Ventil in völlig offener Stellung, also mit vollständig ausgefahrenem Stössel **4** im Maximalhub Hₘₐₓ, mit Vergleich zur geschlossenen Stellung mit vollständig eingefahrenem Stössel **4** im Nullhub **H₀.** Um das Ventil in eine offene Stellung zu bringen, bedarf es der Drehung am Griffstück **10** des Betätigungselements **1.** Durch den zunehmend tieferen Eingriff der Gewinde **16,37** von Schaft **12** des Betätigungselements **1** und feststehender Innenhülse **3** resultiert für den Schaft **12** ein in Richtung Aussen- und Innenhülse **2,3** wirkender Vorschub. Dabei wird der Stössel **4** von dem sich axial verschiebenden Haltering **7,** der vonseiten der zweiten Nut **42** am ersten Ringsegment **41** ansteht, mitgeschleppt. Zugleich schiebt sich das Mittelstück **19** des Betätigungselements **1** mit der in der Nut **14** sitzenden zweiten Dichtung **92** tiefer in die Durchgangsöffnung **22** der Aussenhülse **2** und die Markierzone **13** wird sukzessive überdeckt. Schliesslich kommt der Rand des Mantels **20** der Aussenhülse **2** nahe an der Unterseite des Griffstücks **10** zu liegen und die Markierzone **13** am Betätigungselement **1** wird gänzlich von der Aussenhülse **2** überdeckt, was die Offenstellung des Ventils visualisiert.

Infolge der axialen Verschiebung des Stössels **4** hat sich dessen zweiter Kragen **47** von der Anschlagschulter **390** entfernt und ist bis vor die Eintrittsmündung **380** gelangt. Der erste Kragen **48** steht mit der diesen übergreifenden und in der ersten Stösselnut **480** hängenden Hauptdichtung **8** soweit vor der Eintrittsmündung **380,** dass die Hauptdichtung **8** von der Dichtfläche **39** abgehoben ist und daran angrenzend sich ein Ringspalt zum Einlass anstehenden Mediums in den Axialdurchgang **38** ergeben hat. Das in den Axialdurchgang **38** einströmende Medium tritt durch die Ausflussöffnungen **35**, umspült den Mittelabschnitt **34** und fliesst über den Kanal **28** des Ausflussstutzens **26** in weiter in den Kanal **58** der Tülle **5.**

### Figuren 15A bis 15C

Anhand dieser Figurenfolge werden der konstruktive Aufbau und der Montageablauf eines Ventils *zweiter Variante* dargestellt, was in komprimierter Weise geschehen kann, da im Verhältnis zur *ersten Variante,* bis auf die nun entfallende zweite Dichtung **92,** am Ventil wiederum sämtliche Bauteile vorhanden sind, deren konstruktive Gestaltung teilweise nur in Details modifiziert ist.

Äusserlich am Mittelstück **19** des Betätigungselements **1** sind - entgegen zur *ersten Variante -* keine Markierzone **13** und keine Nut **14** vorhanden. Die Freifläche **36** an der Innenhülse **3** zwischen dem oberen äusseren Bund **33** und der die Innenhülse **3** einerseits abschliessenden Ringschulter **360** wird nun nicht mehrwie zuvor bei der *ersten Variante -* durch einen im Aussendurchmesser verringerten zylindrischen Abschnitt gebildet, sondern durch einen sich vom oberen äusseren Bund **33** zur Ringschulter **360** hin verjüngenden Konusabschnitt. Die Anschlagschulter **390** an der Innenhülse **3** ist nicht mehr vorgesehen. Auf die Radialwulste **44** am zweiten Abschnitt **43** des Stössel **4** sowie auf den Endabschnitt **40** hat man verzichtet.

### Figur 15A-erster Montageschritt

Ausser der nicht mehr benötigten zweiten Dichtung **92,** werden wieder alle übrigen Ventilteile bereitgestellt - sofern modifiziert, jetzt in der geänderten Konstruktion -, nämlich jeweils ein Stück: Betätigungselement **1,** Aussenhülse **2** mit dem im Stutzenwinkel β abgehenden Ausflussstutzen **26,** Innenhülse **3,** Stössel **4,** Tülle **5** mit dem im Tüllenwinkel α abgewinkelten Schlauchanschluss **56,** Kappe **6,** Haltering **7,** Hauptdichtung **8** und erste Dichtung **91.**

### Figur 15B - zweiter Montageschritt

Die erste Dichtung **91** wird in die Nut **31** an der Innenhülse **3** eingelegt. Danach wird auf den Ausflussstutzen **26** die Tülle **5** aufgesteckt, bis die umlaufende Haltekontur **25** der Aussenhülse **2** in der im Axialdurchgang **58** der Tülle **5** vorhandenen Gegenkontur **59** einrastet. Die Tülle **5** ist in der *zweiten Variante* des Ventils unverändert und ebenso auf dem Fortsatz **24** steckend, frei drehbar. Der Stössel **4** wird in den Axialdurchgang **18** des Betätigungselements **1** gesteckt, bis das zweite Ringsegment **45** des Stössels **4** auf die Ringschulter **120** des Betätigungselements **1** auftrifft. Der dritte Abschnitt **43** des Stössels **4** ist im Axialdurchgang **18** des Betätigungselements **1** abdichtend aufgenommen. Anschliessend wird der Haltering **7** über das erste Ringsegment **41** des Stössels **4** geschoben, bis der Haltering **7** in der zweiten Stösselnut **42** einrastet, wodurch der Stössel **4** axial im Betätigungselements **1** fixiert ist. In den zum Griffstück **10** erweitert mündenden Abschnitt des Axialdurchgangs **18** wird die Kappe **6** mit dem Schaft 66 voran eingeschoben, bis deren Innenkontur **67** über den bauchigen Aussenumfang **77** des Halterings **7** schnappt und die Kappe **6** sowie der Haltering **7** sich dadurch gegenseitig sichern.

### Figur 15C - dritter Montageschritt

Die Aussenhülse **2** wird über die Innenhülse **3** gesteckt. Dabei kommt der in der Durchgangsöffnung **22** vorgesehene Bund **21** mit seinem in der lichten Weite verminderten Innendurchmesser im Mittelabschnitt **34** zu liegen und wird durch die beiden äusseren Bunde **33** der Innenhülse **3** begrenzt, wodurch eine axial feste, jedoch radial drehbare Fixierung der Aussenhülse **2** um die Innenhülse **3** entsteht. Das Betätigungselement **1** mit dem bereits darin fixierten Stössel **4** wird durch den Axialdurchgang **38** der Innenhülse **3** eingeführt. Hierbei werden das Aussengewinde **16** des Schafts **12** mit dem in der Innenhülse **3** liegenden Innengewinde **37** verschraubt, bis die Aussenschulter **15** des Betätigungselements **1** auf dem Bund der Innenhülse **3** aufsitzt. Das Ventil nimmt damit die Stellung "völlig offen" mit dem Maximalhub Hₘₐₓ ein, so dass vom Stössel **4** der vordere Bereich bis zum zweiten Kragen **47** vor der Eintrittsmündung **380** zu liegen kommt und sich die Hauptdichtung **8** über die Stirnfläche **49** stülpen lässt. Der Sitz der Hauptdichtung **8** am Stössel **4** ist gegenüber der *ersten Variante* unverändert. Der Verfahrweg des Betätigungselements **1** wird durch den Anschlag der Hauptdichtung **8** an der Dichtfläche **39** der Innenhülse **3,** was den Nullhub H₀ kennzeichnet und durch die beim Maximalhub **Hₘₐₓ,** auf der Ringschulter **360** der Innenhülse **3** aufsitzenden Aussenschulter **15,** vorgegeben.

### Figuren 16A bis 16D

Anhand dieser Figurenfolge werden der konstruktive Aufbau und der Montageablauf eines Ventils *dritter Variante* dargestellt, was erneut in komprimierter Weise geschehen kann, da die *dritte Variante* quasi ein Mix aus *erster* und *zweiter Variante* ist, jedoch mit der wesentlichen Modifikation, dass das Betätigungselement **1** und der Stössel **4** ein fest zusammenhängendes einziges Teil bilden und somit die Kappe **6** und der Haltering 7 entfallen.

### Figur 16A-erster Montageschritt

Beim ersten Montageschritt werden die verbleibenden Einzelteile, also ohne Kappe **6** und ohne Haltering **7,** jedoch mit dem nun in einem Teil vereinigten Betätigungselement **1** und Stössel **4** bereitgestellt. Durch die Vereinigung von Betätigungselement **1** und Stössel **4** entfallen am Betätigungselement **1** der Axialdurchgang **18** sowie die Ringschulter **120.** Von der Stirnfläche **49** aus betrachtet, endet der Stössel **4** mit dem dritten Abschnitt **46,** d.h. alle zuvor weiter oben vorhandenen Abschnitte ab dem zweiten Ringsegment **45** bis zum Endabschnitt **40** sind nicht mehr vorgesehen. Zum Schaft **12** des Betätigungselements **1** hin besitzt der Stössel **4** einen sich konisch erweiternden Übergang. An der Innenhülse **3** gibt es, wie in der *zweiten Variante,* keine Anschlagschulter **390.** Die Aussenhülse **2** mit dem im Stutzenwinkel β abgehenden Ausflussstutzen **26** und die Tülle **5** mit dem im Tüllenwinkel α abknickenden Schlauchanschluss **56** sind unverändert.

### Figur 16B - zweiter Montageschritt

In die an der Innenhülse **3** vorhandene Nut **31** wird die erste Dichtung **91** eingelegt, und die zweite Dichtung **92** wird in die Nut **14** am Mittelstück **19** des Betätigungselements **1** eingesetzt. Anschliessend wird der Ansatz **50** der Tülle **5** auf den Fortsatz **24** des Ausflussstutzens **26** bis an den Anschlag **27** aufgesteckt. Die aufgesteckte Tülle 5 ist frei drehbar.

### Figur 16C- dritter Montageschritt

Über die Innenhülse **3** wird die Aussenhülse **2** gesteckt. Der in der Durchgangsöffnung **22** vorhandene Bund **21** kommt im Mittelabschnitt **34** der Innenhülse **3** zu liegen und wird von den beiden äusseren Bunden **33** begrenzt. Dabei entsteht eine axial feste, jedoch radial drehbare Fixierung der Aussenhülse **2** an der Innenhülse **3.**

### Figur 16D-vierter Montageschritt

Der Stössel **4** mit dem daran einstückig angeordneten Betätigungselement **1** wird durch den Axialdurchgang **38** der Innenhülse **3** eingeführt und mit seinem am Schaft **12** vorhandenen Aussengewinde **16** in das Innengewinde **37** der Innenhülse **3** eingeschraubt, bis die Aussenschulter **15** auf der Ringschulter **360** der Innenhülse **3** aufsitzt. Das Ventil befindet sich in der Stellung "völlig offen" mit dem Maximalhub Hₘₐₓ, so dass vom Stössel **4** der vordere Bereich bis zum zweiten Kragen **47** vor der Eintrittsmündung **380** zu liegen kommt und sich die Hauptdichtung **8** über die Stirnfläche **49** stülpen lässt. Der Verfahrweg von Betätigungselement **1** und Stössel **4** wird durch die an der Dichtfläche **39** der Innenhülse **3** anschlagende Hauptdichtung **8,** was den Nullhub **H₀** kennzeichnet, und durch die beim Maximalhub Hₘₐₓ an der Ringschulter **360** der Innenhülse **3** anschlagende Aussenschulter **15,** definiert.

Bei der *ersten* und *zweiten Variante* bestehen die Innenhülse **3** und der Stössel **4** vorzugsweise aus Metall, während das Betätigungselement **1,** die Aussenhülse **2** und die Tülle **5** vorteilhaft als Kunststoff-Spritzgiessteile gefertigt sind. Bei der *dritten Variante* könnten die einstückige Kombination aus Betätigungselement **1** und Stössel **4,** die Aussenhülse **2** und die Tülle **5** als Kunststoff-Spritzgiessteile gefertigt sein, während die Innenhülse **3** aus Metall besteht. Ebenso wäre bei der *dritten Variante* möglich, dass die einstückige Kombination von Betätigungselement **1** und Stössel **4** aus einem Material-Mix besteht, so dass das Betätigungselement **1** als Kunststoff-Spritzgiessteil hergestellt ist und den metallischen Stössel **4** quasi umschliesst.

## Patentansprüche

1. Entleerventil für ein flüssiges Medium mit:
a) einer Innenhülse **(3)** mit einem Axialdurchgang **(38),** der als Strömungskanal mit einer radialen Ausflussöffnung **(35)** verbunden ist, und einem Aussengewinde **(32),** das zum Eingriff mit einem Innengewinde an einem Leitungsstutzen bestimmt ist;
b) einem in der Innenhülse **(3)** axial angeordnetem Stössel **(4),** der sich zwischen einem im Zustand des geschlossenen Entleerventils eingenommenen Nullhub (H₀) und einem im vollständig offenem Zustand eingenommenen Maximalhub (Hₘₐₓ) bewegen lässt;
c) einem drehbaren Betätigungselement **(1),** welches mit dem Stössel **(4)** in Verbindung steht und zu seinem axialen Hub dient;
d) einer Aussenhülse **(2)** mit einem Ausflussstutzen **(26)** und einem die Innenhülse **(3)** umgebenden Mantel **(20),** wobei die Aussenhülse **(2)** um die Innenhülse **(3)** radial schwenkbar ist und die Ausflussöffnung **(35)** der Innenhülse **(3)** mit einem Kanal **(28)** im Ausflussstutzen **(26)** strömungsseitig verbunden ist;
e) einer am Stössel **(4)** angeordneten Hauptdichtung **(8),** welche dazu bestimmt ist, im Zustand des geschlossenen Entleerventils, beim eingenommenen Nullhub (H₀), gegen eine an der Innenhülse **(3)** liegende Dichtfläche **(39)** wirkend den Zufluss zur radialen Ausflussöffnung **(35)** zu sperren;
f) die Dichtfläche **(39)** für die Hauptdichtung **(8)** an einer Eintrittsmündung **(380)** im Axialdurchgang **(38)** ausgebildet ist;
g) die Hauptdichtung **(8)** beim Maximalhub (Hₘₐₓ) von der Innenhülse **(3)** entfernt von der Dichtfläche **(39)** abgehoben ist, **dadurch gekennzeichnet, dass**
h) die Hauptdichtung **(8)** kappenförmig ausgebildet ist, um eine Stirnfläche **(49)** des Stössels **(4)** zu übergreifen.

2. Entleerventil nach Anspruch 1, **dadurch gekennzeichnet, dass** die Hauptdichtung **(8)** lösbar auf dem Stössel **(4)** sitzt.

3. Entleerventil nach zumindest einem der Ansprüche 1 und 2, **dadurch gekennzeichnet, dass**
a) die Stirnfläche **(49)** des Stössels **(4)** in einen ersten Kragen **(48)** übergeht, dem eine erste Nut **(480)** folgt, die sich vor einem zweiten Kragen **(47)** befindet;
b) eine Bodenfläche **(80)** der Hauptdichtung **(8)** an der Stirnfläche **(49)** des Stössels **(4)** anliegt;
c) eine Seitenwand **(81)** der Hauptdichtung **(8)** den ersten Kragen **(48)** am Stössel **(4)** umgreift und in die erste Nut **(480)** hineinragt und ein im lichten Durchmesser verengter Innenrand **(82)** der Hauptdichtung **(8)** in der ersten Nut **(480)** zu liegen kommt; und
d) ein Abschnitt der Seitenwand **(81)** der Hauptdichtung **(8)** im geschlossenen Zustand beim Nullhub (H₀) zum Anliegen an der Dichtfläche **(39)** der Innenhülse (3) bestimmt ist.

4. Entleerventil nach zumindest einem der Ansprüche 1 bis 3, **dadurch gekennzeichnet, dass**
a) der zweite Kragen **(47)** im geschlossenen Zustand beim Nullhub (H₀) an eine Anschlagschulter **(390)** im Axialdurchgang **(38)** der Innenhülse **(3)** stösst, was ausser der Hubbegrenzung zugleich eine zusätzliche Dichtstelle ergibt; und
b) dem zweiten Kragen **(47)** ein im Durchmesser reduzierter dritter Abschnitt **(46)** mit vorzugsweise kegelförmigem Übergang folgt.

5. Entleerventil nach zumindest einem der Ansprüche 1 bis 4, **dadurch gekennzeichnet, dass**
a) am Ausflussstutzen **(26)** eine abgewinkelte Tülle **(5),** die als Formstück einen Tüllenwinkel (α) aufweist, frei drehbar angeordnet ist; und vorzugsweise
b) die Tülle **(5)** auf den Ausflussstutzen **(26)** aufrastbar ist.

6. Entleerventil nach zumindest einem der Ansprüche 1 bis 5, **dadurch gekennzeichnet, dass**
a) sich vom Mantel **(20)** der Aussenhülse **(2)** ein zum Ausflussstutzen **(26)** gehörender Ansatz **(23)** erstreckt, der in einen Fortsatz **(24)** übergeht;
b) der Ausflussstutzen **(26)** mit dem vom Mantel **(20)** abgehenden Ansatz **(23)** und dem daran anschliessenden Fortsatz **(24)** einen Stutzenwinkel (β) einnimmt, der sich zur auf die Längserstreckung des Entleerventils gerichteten Senkrechten bemisst;
c) der Fortsatz **(24)** mit einem Ansatz **(50)** der Tülle **(5)** verbunden ist;
d) vom Ansatz **(50)** im Tüllenwinkel (α) ein Schlauchanschluss **(56)** abgewinkelt abgeht; und
e) der Kanal **(28)** im Ausflussstutzen **(26)** sich als ein am freien Ende der Tülle (5) offener Kanal **(58)** fortsetzt.

7. Entleerventil nach zumindest einem der Ansprüche 5 und 6, **dadurch gekennzeichnet, dass**
a) der Stutzenwinkel (β) und der Tüllenwinkel (α) gleiche Werte haben, z.B. 22.5°; und somit
b) der Schlauchanschluss **(56)** in einem Anschlusswinkel (δ) zwischen 0° und der Summe aus dem Tüllenwinkel (α) und dem Stutzenwinkel (β) durch Drehung der Tülle **(5)** einstellbar ist, bemessen zur auf die Längserstreckung des Entleerventils gerichteten Senkrechten.

8. Entleerventil nach zumindest einem der Ansprüche 5 bis 7, **dadurch gekennzeichnet, dass**
a) am Fortsatz **(24)** des Ausflussstutzens **(26)** eine Haltekontur **(25)** vorhanden ist und der Ansatz **(50)** der Tülle **(5)** eine dazu komplementäre Gegenkontur **(59)** hat, die im montierten Zustand ineinander greifen;
b) der Schlauchanschluss **(56)** eine Aussenprofilierung **(57)** besitzt; und
c) sich am Ausflussstutzen **(26)** ein Anschlag **(27)** befindet, gegen den der aufgesteckte Ansatz **(50)** der Tülle **(5)** stösst.

9. Entleerventil nach mindestens einem der Ansprüche 1 bis 8, **dadurch gekennzeichnet, dass**
a) der Mantel **(20)** der Aussenhülse **(2)** eine Durchgangsöffnung **(22)** umgibt;
b) in der Durchgangsöffnung **(22)** ist ein nach innen erhabener Bund **(21)** vorgesehen, der zwischen zwei zueinander beabstandeten äusseren Bunden **(33)** der Innenhülse **(3)** zu liegen kommt; und
c) der Kanal **(28)** des Ausflussstutzens **(26)** im Bereich des Bunds (21) abzweigt.

10. Entleerventil nach mindestens einem der Ansprüche 1 bis 9, **dadurch gekennzeichnet, dass**
a) das Betätigungselement **(1)** einerseits ein von aussen zugängliches Griffstück **(10)** und andererseits einen zylindrischen Schaft **(12)** besitzt, wobei beide durch ein Mittelstück **(19)** verbunden sind;
b) der Schaft **(12)** zwischen einem am Stössel **(4)** im Durchmesser verdickten zweiten Ringsegment **(45)** sowie einem Haltering **(7)** axial fixiert ist, der in einer am Stössel **(4)** vorhandenen zweiten Nut **(42)** sitzt; und
c) der Schaft **(12)** mit einem Aussengewinde **(16)** versehen ist, welches mit einem Innengewinde **(37)** an der Innenhülse **(3)** in Eingriff steht.

11. Entleerventil nach mindestens einem der Ansprüche 1 bis 10, **dadurch gekennzeichnet, dass**
a) die Ausflussöffnung **(35)** an der Innenhülse **(3)** an einem im Aussendurchmesser verminderten Mittelabschnitt **(34)** vorhanden ist, der beidseits von jeweils einem äusseren Bund **(33)** begrenzt wird;
b) die Ausflussöffnung **(35)** beidseits der Hülsenwandung durch eine jeweilige Abflachung **(340)** erzeugt ist, welche sich anteilig über den Mittelabschnitt **(34)** bis an den Bereich des Innengewindes **(37)** erstrecken;
c) zwischen dem Aussengewinde **(32)** mit einer benachbarten Nut **(31)** zur Aufnahme einer ersten Dichtung **(91)** und dem nächstliegenden äusseren Bund **(33)** ist eine Aussenprofilierung **(30),** z.B. ein Sechskant, vorgesehen;
d) am zum Aussengewinde **(32)** gegenüber liegenden Ende, das mit einer Ringschulter **(360)** abschliesst, die Innenhülse **(3)** eine durch Verminderung des Aussendurchmessers erzeugte Freifläche **(36)** hat, die an die Ringschulter **(360)** angrenzt;
e) der am Mantel **(20)** der Aussenhülse **(2)** nach innen erhabene Bund **(21)** zwischen den beiden äusseren Bunden **(33)** der Innenhülse **(3)** formschlüssig eingerastet ist; und
f) der Eintrittsquerschnitt in den Kanal **(28)** im Ansatz **(23)** des Ausflussstutzens **(26)** sich zumindest anteilig über die Ausflussöffnung **(35)** hinaus innerhalb des Mittelabschnitts **(34)** erstreckt.

12. Entleerventil nach mindestens einem der Ansprüche 1 bis 11, **dadurch gekennzeichnet, dass**
a) an einem zweiten Abschnitt **(43)** des Stössels **(4)** zumindest eine Radialwulst **(44)** mit Abdichtfunktion gegenüber dem Schaft **(12)** des Betätigungselements **(1)** vorhanden ist;
b) der Schaft **(12)** des Betätigungselements **(1)** an einer Innenschulter **(17)** in das Mittelstück **(19)** übergeht;
c) der Haltering **(7)** auf der Innenschulter **(17)** anliegt;
d) das Mittelstück **(19)** eine äussere Markierzone **(13)** besitzt, welche zum Griffstück **(10)** benachbart ist und der Visualisierung für die Hubstellung des Entleerventils dient;
e) das Mittelstück **(19)** am Übergang zum Schaft **(12)** eine Nut **(14)** zur Aufnahme einer zweiten Dichtung **(92)** mit der Abdichtfunktion gegenüber der Durchgangsöffnung **(22)** im Mantel **(20)** der Aussenhülse **(2)** besitzt.

13. Entleerventil nach mindestens einem der Ansprüche 1 bis 12, **dadurch gekennzeichnet, dass**
a) der Haltering **(7)** einen bauchigen Aussenumfang **(77)** hat und vorzugsweise zur Erleichterung des Einbringens in die zweite Nut **(42)** des Stössels **(4)** mit einem Schlitz **(70)** versehen ist;
b) eine Kappe **(6)** mit einer Deckfläche **(60)** und einem hülsenförmigen Schaft **(66)** vorgesehen ist, an dessen freien Ende sich eine Innenkontur **(67)** befindet und ein sich bis zur Deckfläche **(60)** erstreckender Hohlraum **(68)** austritt;
c) der Schaft **(66)** der Kappe **(6)** das Griffstück **(10)** des Betätigungselements **(1)** durchragt und in dessen Axialdurchgang **(18)** hineinragt;
d) die Innenkontur **(67)** des Kappenschafts **(66)** den bauchigen Aussenumfang **(77)** des Halterings **(7)** klemmend umfasst; und
e) vom Stössel **(4)** ein Endabschnitt **(40),** ein angrenzendes erstes Ringsegment **(41)** und der Bereich der zweiten Nut **(42)** im Kappenhohlraum **(68)** zu liegen kommen.

14. Entleerventil nach mindestens einem der Ansprüche 1 bis 13, **dadurch gekennzeichnet, dass**
a) das Griffstück **(10)** des Betätigungselements **(1)** die Gestalt eines Handrads mit einer Aussenprofilierung **(11)** als Rutschhemmung hat; und
b) die Markierzone **(13)** farbig gestaltet ist.

15. Entleerventil nach mindestens einem der Ansprüche 1 bis 3, 5 bis 9, 11 und 14, **dadurch gekennzeichnet, dass** die Verbindung zwischen Betätigungselement **(1)** und Stössel **(4)** als einstückiger Übergang des Schafts **(12)** des Betätigungselements **(1)** in den dritten Abschnitt **(46)** des Stössels **(4)** vorhanden ist und somit Betätigungselement **(1)** und Stössel **(4)** ein fest zusammenhängendes einziges Teil bilden.

16. Entleerventil nach Anspruch 15, **dadurch gekennzeichnet, dass**
a) das Betätigungselement **(1)** einerseits ein von aussen zugängliches Griffstück **(10)** und andererseits den zylindrischen Schaft **(12)** besitzt, wobei beide durch ein Mittelstück **(19)** verbunden sind; und
b) der Schaft **(12)** mit einem Aussengewinde **(16)** versehen ist, welches mit einem Innengewinde **(37)** an der Innenhülse **(3)** in Eingriff steht.

17. Entleerventil nach zumindest einem der Ansprüche 15 und 16, **dadurch gekennzeichnet, dass** das Mittelstück **(19)** am Übergang zum Schaft **(12)** eine Nut **(14)** zur Aufnahme einer zweiten Dichtung **(92)** mit der Abdichtfunktion gegenüber der Durchgangsöffnung **(22)** im Mantel **(20)** der Aussenhülse **(2)** besitzt.

## Claims

1. Drain valve for a liquid medium, with:
a) an inner sleeve (3) having an axial passage (38) which is connected as a flow duct to a radial outflow opening (35), and having an external thread (32) which is intended for engagement with an internal thread on a line connecting piece;
b) a valve lifter (4) which is arranged axially in the inner sleeve (3) and can be moved between a zero lift (H₀) taken up in the state of the closed drain valve and a maximum lift (Hₘₐₓ) taken up in the completely open state;
c) a rotatable actuating element (1) which is connected to the valve lifter (4) and serves for the axial lifting thereof;
d) an outer sleeve (2) having an outflow connecting piece (26) and a circumferential surface (20) surrounding the inner sleeve (3), wherein the outer sleeve (2) can be pivoted radially about the inner sleeve (3), and the outflow opening (35) of the inner sleeve (3) is connected on the flow side to a duct (28) in the outflow connecting piece (26) ;
e) a main seal (8) which is arranged on the valve lifter (4) and, acting against a sealing face (39) located on the inner sleeve (3), is intended, in the state of the closed drain valve when the zero lift (H₀) is taken up, to block the inflow to the radial outflow opening (35);
f) the sealing face (39) for the main seal (8) is formed on an entry mouth (380) in the axial passage (38);
g) the main seal (8) is lifted away from the sealing face (39) during the maximum lift (Hₘₐₓ) of the inner sleeve (3), **characterized in that**
h) the main seal (8) is of cap-shaped design in order to fit over an end face (49) of the valve lifter (4).

2. Drain valve according to Claim 1, **characterized in that** the main seal (8) sits releasably on the valve lifter (4).

3. Drain valve according to at least one of Claims 1 and 2, **characterized in that**
a) the end face (49) of the valve lifter (4) merges into a first collar (48) which is followed by a first groove (480) which is located in front of a second collar (47);
b) a bottom face (80) of the main seal (8) bears against the end face (49) of the valve lifter (4);
c) a side wall (81) of the main seal (8) fits around the first collar (48) on the valve lifter (4) and projects into the first groove (480), and an inner edge (82) of the main seal (8), which inner edge is constricted in terms of clear diameter, comes to lie in the first groove (480); and
d) a section of the side wall (81) of the main seal (8) is intended to bear against the sealing face (39) of the inner sleeve (3) in the closed state during the zero lift (H₀).

4. Drain valve according to at least one of Claims 1 to 3, **characterized in that**
a) the second collar (47) strikes against a stop shoulder (390) in the axial passage (38) of the inner sleeve (3) in the closed state during the zero lift (H₀), which, apart from limiting the lift, results at the same time in an additional sealing point; and
b) the second collar (47) is followed by a third section (46) which is reduced in diameter and has a preferably conical transition.

5. Drain valve according to at least one of Claims 1 to 4, **characterized in that**
a) an angled nozzle (5) which, as a shaped component, has a nozzle angle (α) is arranged in a freely rotatable manner on the outflow connecting piece (26); and preferably
b) the nozzle (5) can be latched onto the outflow connecting piece (26).

6. Drain valve according to at least one of Claims 1 to 5, **characterized in that**
a) an attachment (23) which belongs to the outflow connecting piece (26) and merges into an extension (24) extends from the circumferential surface (20) of the outer sleeve (2);
b) the outflow connecting piece (26) takes up a connecting piece angle (β) with the attachment (23) originating from the circumferential surface (20) and with the adjoining extension (24), the connecting piece angle being calculated with respect to the perpendicular directed onto the longitudinal extent of the drain valve;
c) the extension (24) is connected to an attachment (50) of the nozzle (5);
d) a hose connection (56) is angled off from the attachment (50) at the nozzle angle (α); and
e) the duct (28) in the outflow connecting piece (26) continues as a duct (58) which is open at the free end of the nozzle (5).

7. Drain valve according to at least one of Claims 5 and 6, **characterized in that**
a) the connecting piece angle (β) and the nozzle angle (α) have the same values, for example 22.5°; and therefore
b) the hose connection (56) can be set at a connection angle (δ) of between 0° and the sum total of the nozzle angle (α) and the connecting piece angle (β) by rotation of the nozzle (5), in a manner dimensioned with respect to the perpendicular directed onto the longitudinal extent of the drain valve.

8. Drain valve according to at least one of Claims 5 to 7, **characterized in that**
a) there is a retaining contour (25) on the extension (24) of the outflow connecting piece (26), and the attachment (50) of the nozzle (5) has a mating contour (59), which is complementary with respect thereto, said contours intermeshing in the fitted state;
b) the hose connection (56) has an external profiling (57); and
c) the outflow connecting piece (26) has a stop (27) against which the plugged-on attachment (50) of the nozzle (5) strikes.

9. Drain valve according to at least one of Claims 1 to 8, **characterized in that**
a) the circumferential surface (20) of the outer sleeve (2) surrounds a passage opening (22);
b) the passage opening (22) is provided with an inwardly raised flange (21) which comes to lie between two spaced-apart, outer flanges (33) of the inner sleeve (3); and
c) the duct (28) in the outflow connecting piece (26) branches off in the region of the flange (21).

10. Drain valve according to at least one of Claims 1 to 9, **characterized in that**
a) the actuating element (1) has an outwardly accessible gripping component (10) at one end and a cylindrical stem (12) at the other end, said components being connected by a central component (19);
b) the stem (12) is fixed axially between a second annular segment (45), which is enlarged in diameter on the valve lifter (4), and a retaining ring (7) which sits in a second groove (42) present on the valve lifter (4), and
c) the stem (12) is provided with an external thread (16) which is in engagement with an internal thread (37) on the inner sleeve (3).

11. Drain valve according to at least one of Claims 1 to 10, **characterized in that**
a) the outflow opening (35) is present on the inner sleeve (3) on a central section (34) which is reduced in terms of outside diameter and is bounded on both sides by a respective outer flange (33);
b) the outflow opening (35) is produced on both sides of the sleeve wall by a respective flattened portion (340), parts of which extend over the central section (34) as far as the region of the internal thread (37);
c) an external profiling (30), for example a hexagon, is provided between the external thread (32) having an adjacent groove (31) for receiving a first seal (91) and the nearest outer flange (33);
d) at the end which is opposite the external thread (32) and is ended by an annular shoulder (360), the inner sleeve (3) has a free face (36) which is produced by a reduction in the external diameter and is adjacent to the annular shoulder (360);
e) the flange (21) which is raised inwards on the circumferential surface (20) of the outer sleeve (2) is latched in a form-fitting manner between the two outer flanges (33) of the inner sleeve (3); and
f) at least a portion of the entry cross section into the duct (28) in the attachment (23) of the outflow connecting piece (26) extends beyond the outflow opening (35) within the central section (34).

12. Drain valve according to at least one of Claims 1 to 11, **characterized in that**
a) at least one radial bead (44) having a sealing function in relation to the stem (12) of the actuating element (1) is present on a second section (43) of the valve lifter (4);
b) the stem (12) of the actuating element (1) merges at an inner shoulder (17) into the central component (19);
c) the retaining ring (7) rests on the inner shoulder (17);
d) the central component (19) has an outer marking zone (13) which is adjacent to the gripping component (10) and serves for the visualization of the lifting position of the drain valve;
e) the central component (19) has a groove (14) at the transition to the stem (12) for receiving a second seal (92) having the sealing function in relation to the passage opening (22) in the circumferential surface (20) of the outer sleeve (2).

13. Drain valve according to at least one of Claims 1 to 12, **characterized in that**
a) the retaining ring (7) has a bulging outer circumference (77) and is preferably provided with a slot (70) to facilitate the introduction into the second groove (42) of the valve lifter (4);
b) a cap (6) having a top surface (60) and a sleeve-shaped stem (66) is provided, at the free end of which an inner contour (67) is located and a cavity (68) extending as far as the top surface (60) emerges;
c) the stem (66) of the cap (6) protrudes through the gripping component (10) of the actuating element (1) and projects into the axial passage (18) thereof;
d) the inner contour (67) of the cap stem (66) encompasses the bulging outer circumference (77) of the retaining ring (7) in a clamping manner; and
e) of the valve lifter (4), an end section (40), an adjacent first annular segment (41) and the region of the second groove (42) come to lie in the cap cavity (68).

14. Drain valve according to at least one of Claims 1 to 13, **characterized in that**
a) the gripping component (10) of the actuating element (1) is in the form of a hand wheel with an external profile (11) as a means of preventing slipping; and
b) the marking zone (13) is of coloured design.

15. Drain valve according to at least one of Claims 1 to 3, 5 to 9, 11 and 14, **characterized in that** the connection between the actuating element (1) and valve lifter (4) is present as an integral transition of the stem (12) of the actuating element (1) into the third section (46) of the valve lifter (4), and therefore the actuating element (1) and valve lifter (4) form a fixedly interlinked single part.

16. Drain valve according to Claim 15, **characterized in that**
a) the actuating element (1) has an outwardly accessible gripping component (10) at one end and the cylindrical stem (12) at the other end, the two components being connected by a central component (19); and
b) the stem (12) is provided with an external thread (16) which is in engagement with an internal thread (37) on the inner sleeve (3).

17. Drain valve according to at least one of Claims 15 and 16, **characterized in that** at the transition to the stem (12) the central component (19) has a groove (14) for receiving a second seal (92) having the sealing function in relation to the passage opening (22) in the circumferential surface (20) of the outer sleeve (2).

## Revendications

1. Soupape de vidange pour un milieu fluide, comprenant :
a) une douille interne (3) avec un passage axial (38) qui est connecté sous forme de canal d'écoulement à une ouverture de sortie radiale (35), et un filetage externe (32) qui est prévu pour s'engager avec un filetage interne sur une tubulure de conduite ;
b) un poussoir (4) disposé axialement dans la douille interne (3), qui peut être déplacé entre une course nulle (H₀) se produisant dans l'état fermé de la soupape de vidange, et une course maximale (Hₘₐₓ) se produisant dans l'état complètement ouvert ;
c) un élément d'actionnement rotatif (1), qui est en liaison avec le poussoir (4) et qui sert à sa course axiale ;
d) une douille externe (2) avec une tubulure de sortie (26) et une enveloppe (20) entourant la douille interne (3), la douille externe (2) pouvant pivoter radialement autour de la douille interne (3) et l'ouverture de sortie (35) de la douille interne (3) étant connectée à un canal (28) dans la tubulure de sortie (26) du côté de l'écoulement ;
e) un joint d'étanchéité principal (8) disposé sur le poussoir (4), qui est prévu, dans l'état fermé de la soupape de vidange, lorsque la course adoptée est la course nulle (H₀), pour bloquer l'afflux vers l'ouverture de sortie radiale (35) en agissant à l'encontre d'une surface d'étanchéité (39) située contre la douille interne (3) ;
f) la surface d'étanchéité (39) pour le joint d'étanchéité principal (8) étant réalisée sur une embouchure d'entrée (380) dans le passage axial (38) ;
g) le joint d'étanchéité principal (8) lors de la course maximale (Hₘₐₓ) étant soulevé de la douille interne (3) à l'écart de la surface d'étanchéité (39), **caractérisé en ce que**
h) le joint d'étanchéité principal (8) est réalisé en forme de capuchon, afin de venir en prise par le dessus avec une surface frontale (49) du poussoir (4).

2. Soupape de vidange selon la revendication 1, **caractérisée en ce que** le joint d'étanchéité principal (8) repose de manière amovible sur le poussoir (4).

3. Soupape de vidange selon au moins l'une quelconque des revendications 1 et 2, **caractérisée en ce que**
a) la surface frontale (49) du poussoir (4) se prolonge par un premier rebord (48), qui est suivi par une première rainure (480), qui se trouve avant un deuxième rebord (47) ;
b) une surface de fond (80) du joint d'étanchéité principal (8) s'applique contre la surface frontale (49) du poussoir (4) ;
c) une paroi latérale (81) du joint d'étanchéité principal (8) vient en prise autour du premier rebord (48) sur le poussoir (4) et pénètre dans la première rainure (480) et un bord interne (82) de diamètre intérieur réduit du joint d'étanchéité principal (8) vient s'appliquer dans la première rainure (480) ; et
d) une portion de la paroi latérale (81) du joint d'étanchéité principal (8) est prévue dans l'état fermé, lorsque la course est nulle (H₀), pour s'appliquer contre la surface d'étanchéité (39) de la douille interne (3).

4. Soupape de vidange selon au moins l'une quelconque des revendications 1 à 3, **caractérisée en ce que**
a) le deuxième rebord (47), dans l'état fermé lorsque la course (H₀) est nulle, bute contre un épaulement de butée (390) dans le passage axial (38) de la douille interne (3), ce qui produit, en plus d'une limitation de la course, en même temps une zone d'étanchéité supplémentaire, et
b) le deuxième rebord (47) est suivi d'une troisième portion (46) de diamètre réduit avec une transition de préférence de forme conique.

5. Soupape de vidange selon au moins l'une quelconque des revendications 1 à 4, **caractérisée en ce que**
a) sur la tubulure de sortie (26) est disposée, de manière librement rotative, une manche coudée (5), qui présente en tant que pièce moulée un angle de manche (α) ; et de préférence
b) la manche (5) peut être encliquetée sur la tubulure de sortie (26).

6. Soupape de vidange selon au moins l'une quelconque des revendications 1 à 5, **caractérisée en ce que**
a) une pièce (23) appartenant à la tubulure de sortie (26) s'étendant depuis l'enveloppe (20) de la douille externe (2) se prolonge dans une saillie (24) ;
b) la tubulure de sortie (26) forme avec la pièce (23) partant de l'enveloppe (20) et la saillie s'y raccordant (24) un angle de tubulure (β), qui est mesuré par rapport à la perpendiculaire à l'étendue longitudinale de la soupape de vidange ;
c) la saillie (24) est connectée à une pièce (50) de la manche (5) ;
d) un raccord de tuyau (56) part de manière coudée depuis la pièce (50) dans l'angle de manche (α) ; et
e) le canal (28) dans la tubulure de sortie (26) se prolonge sous forme de canal (58) ouvert à l'extrémité libre de la manche (5).

7. Soupape de vidange selon au moins l'une quelconque des revendications 5 et 6, **caractérisée en ce que**
a) l'angle de tubulure (β) et l'angle de manche (α) ont les mêmes valeurs, par exemple de 22,5° ; et ainsi
b) le raccord de tuyau (56) peut être ajusté dans un angle de raccordement (δ) compris entre 0° et la somme de l'angle de manche (α) et de l'angle de tubulure (β) par rotation de la manche (5), mesuré par rapport à la perpendiculaire à l'étendue longitudinale de la soupape de vidange.

8. Soupape de vidange selon au moins l'une quelconque des revendications 5 à 7, **caractérisée en ce que**
a) au niveau de la saillie (24) de la tubulure de sortie (26) est prévu un contour de retenue (25) et la pièce (50) de la manche (5) a un contour conjugué complémentaire (59), ces contours venant en prise l'un dans l'autre dans l'état monté ;
b) le raccord de tuyau (56) possède un profilage extérieur (57) ; et
c) une butée (27) est disposée sur la tubulure de sortie (26), contre laquelle la pièce (50) enfichée de la manche (5) vient buter.

9. Soupape de vidange selon au moins l'une quelconque des revendications 1 à 8, **caractérisée en ce que**
a) l'enveloppe (20) de la douille externe (2) entoure une ouverture de passage (22) ;
b) dans l'ouverture de passage (22) est prévu un épaulement (21) rehaussé vers l'intérieur, qui vient s'appliquer entre deux épaulements extérieurs (33) espacés l'un de l'autre de la douille interne (3) ; et
c) le canal (28) de la tubulure de sortie (26) bifurque dans la région de l'épaulement (21).

10. Soupape de vidange selon au moins l'une quelconque des revendications 1 à 9, **caractérisée en ce que**
a) l'élément d'actionnement (1) possède d'une part un élément de préhension accessible de l'extérieur (10) et d'autre part une tige cylindrique (12), ces deux pièces étant connectées par une pièce intermédiaire (19) ;
b) la tige (12) est fixée axialement entre un deuxième segment annulaire (45) de diamètre épaissi sur le poussoir (4) et une bague de retenue (7), qui repose dans une deuxième rainure (42) prévue sur le poussoir (4), et
c) la tige (12) est pourvue d'un filetage externe (16) qui vient en prise avec un filetage interne (37) sur la douille interne (3).

11. Soupape de vidange selon au moins l'une quelconque des revendications 1 à 10, **caractérisée en ce que**
a) l'ouverture de sortie (35) sur la douille interne (3) est prévue sur une portion centrale (34) de diamètre extérieur réduit, qui est limitée de part et d'autre par un épaulement extérieur respectif (33) ;
b) l'ouverture de sortie (35) est produite de part et d'autre de la paroi de la douille par un méplat respectif (340) qui s'étend en partie sur la portion centrale (34) jusqu'à la région du filetage interne (37) ;
c) entre le filetage externe (32) avec une rainure adjacente (31) pour recevoir un premier joint d'étanchéité (91) et l'épaulement extérieur suivant (33) est prévu un profilage extérieur (30), par exemple une arête à six pans ;
d) à l'extrémité opposée au filetage externe (32), qui se termine par un épaulement annulaire (360), la douille interne (3) présente une surface libre (36) produite par une réduction du diamètre extérieur, qui est adjacente à l'épaulement annulaire (360) ;
e) l'épaulement (21) rehaussé vers l'intérieur sur l'enveloppe (20) de la douille externe (2) est encliqueté par engagement par correspondance géométrique entre les deux épaulements extérieurs (33) de la douille interne (3) ; et
f) la section transversale d'entrée dans le canal (28) dans la pièce (23) de la tubulure de sortie (26) s'étend au moins en partie au-delà de l'ouverture de sortie (35) à l'intérieur de la portion centrale (34).

12. Soupape de vidange selon au moins l'une quelconque des revendications 1 à 11, **caractérisée en ce que**
a) au moins un bourrelet radial (44) ayant une fonction d'étanchéité par rapport à la tige (12) de l'élément d'actionnement (1) est prévu sur une deuxième portion (43) du poussoir (4) ;
b) la tige (12) de l'élément d'actionnement (1) se prolonge par la pièce centrale (19) au niveau d'un épaulement interne (17) ;
c) la bague de retenue (7) s'applique sur l'épaulement interne (17) ;
d) la pièce centrale (19) possède une zone de marquage extérieure (13), qui est adjacente à la pièce de préhension (10) et qui sert à la visualisation pour la position de la course de la soupape de vidange ;
e) la pièce centrale (19) possède, au niveau de la transition avec la tige (12) une rainure (14) pour recevoir un deuxième joint d'étanchéité (92) ayant une fonction d'étanchéité par rapport à l'ouverture de passage (22) dans l'enveloppe (20) de la douille externe (2).

13. Soupape de vidange selon au moins l'une quelconque des revendications 1 à 12, **caractérisée en ce que**
a) la bague de retenue (7) a une périphérie extérieure bombée (77) et est de préférence pourvue d'une fente (70) pour faciliter l'insert dans la deuxième rainure (42) du poussoir (4) ;
b) un capuchon (6) avec une surface de recouvrement (60) et une tige en forme de douille (66) est prévu, à l'extrémité libre de laquelle se trouve un contour interne (67) et sort une cavité (68) s'étendant jusqu'à la surface de recouvrement (60) ;
c) la tige (66) du capuchon (6) traverse la pièce de préhension (10) de l'élément d'actionnement (1) et pénètre dans son passage axial (18) ;
d) le contour interne (67) de la tige de capuchon (66) enserre la périphérie extérieure bombée (77) de la bague de retenue (7) ; et
e) depuis le poussoir (4), une portion d'extrémité (40), un premier segment annulaire adjacent (41) et la région de la deuxième rainure (42) viennent s'appliquer dans la cavité du capuchon (68).

14. Soupape de vidange selon au moins l'une quelconque des revendications 1 à 13, **caractérisée en ce que**
a) la pièce de préhension (10) de l'élément d'actionnement (1) a la forme d'un volant avec un profilage extérieur (11) en tant que système antidérapant ; et
b) la zone de marquage (13) est colorée.

15. Soupape de vidange selon au moins l'une quelconque des revendications 1 à 3, 5 à 9, 11 et 14, **caractérisée en ce que** la connexion entre l'élément d'actionnement (1) et le poussoir (4) est prévue sous forme de transition d'une seule pièce de la tige (12) de l'élément d'actionnement (1) dans la troisième portion (46) du poussoir (4), et ainsi l'élément d'actionnement (1) et le poussoir (4) forment une partie unique rattachée fixement.

16. Soupape de vidange selon la revendication 15, **caractérisée en ce que**
a) l'élément d'actionnement (1) d'une part possède une pièce de préhension (10) accessible depuis l'extérieur et d'autre part la tige cylindrique (12), les deux pièces étant connectées par une pièce intermédiaire (19) ; et
b) la tige (12) est pourvue d'un filetage externe (16) qui est en prise avec un filetage interne (37) sur la douille interne (3).

17. Soupape de vidange selon au moins l'une quelconque des revendications 15 et 16, **caractérisée en ce que** la pièce centrale (19) possède, à la transition avec la tige (12), une rainure (14) pour recevoir un deuxième joint d'étanchéité (92) ayant une fonction d'étanchéité par rapport à l'ouverture de passage (22) dans l'enveloppe (20) de la douille externe (2).
